(19) Europäisches Patentamt
European Patent Office
Office européen des brevets

(11) **EP 2 477 316 A2**

(12) **EUROPÄISCHE PATENTANMELDUNG**

(43) Veröffentlichungstag:
**18.07.2012 Patentblatt 2012/29**

(51) Int Cl.:
**H02K 21/24** *(2006.01)* **H02K 9/06** *(2006.01)*

(21) Anmeldenummer: **12000100.3**

(22) Anmeldetag: **11.01.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **15.01.2011 DE 202011001558 U**

(71) Anmelder: **Ginzel, Lothar**
**58239 Schwerte (DE)**

(72) Erfinder: **Die Erfindernennung liegt noch nicht vor**

(54) **Modular elektrische Vorrichtung**

(57) Die Erfindung betrifft eine modulare elektrische Vorrichtung (1, 34, 37, 64, 66, 79), im Wesentlichen bestehend aus einer flachen, ringförmigen, stehenden selbsttragenden Wicklung (2) und damit beidseitig zusammenwirkenden Permanentmagnetsystemen (3), wobei die Permanentmagnetsysteme (3) aus Dauermagneten (81, 82, 83, 84, 87) mit einer direkt aneinander gereihten mehrfachen Pollänge $P_L$ gebildet werden, die jeweils unterschiedliche Vorzugsmagnetisierungsrichtungen aufweisen, die innerhalb einer Pollänge $P_L$ mit einer Polfläche (86) so ausgebildet sind, dass an jeder Polfläche (86) ein gerichteter verstärkter, magnetischer Fluss mit wechselnder Polarität besteht, wobei die elektrische Vorrichtung (1, 34, 37, 64, 66, 79) ein konstantes Drehmoment über seinen gesamten Drehzahlbereich aufweist, und für eine direkte oder indirekte Antriebsart über eine Achse (13, 43) oder über eine runde Umfangsfläche (28) verwendbar ist.

Fig. 1

EP 2 477 316 A2

**Beschreibung**

Die Erfindung betrifft eine modulare elektrische aus einzelnen, austauschbaren Modulen zusammengesetzte, nuten- und bürstenlose elektrische Vorrichtung, die im Wesentlichen aus einer als flache Scheibe ausgebildeten Wicklung und einem damit zusammen wirkenden Permanentmagnetsystem besteht. Eine derartige Vorrichtung kann zum Antrieb unterschiedlichster Dinge verwendet werden, wie insbesondere zum Antrieb von Türen, Tore, Karusselltüren, ortsveränderbaren Wänden oder dergleichen, gleichzeitig kann die Vorrichtung aber auch als Generator verwendet werden.

Eine elektrische Maschine, die zur Erzeugung eines Erregerfeldes mindestens ein permanentmagnetisches Polpaar und mindestens eine, von einem elektrischen Strom durchfließbare Leiterbahn aufweist, ist aus der DE 32 31 966 A1 zu entnehmen. Das magnetische Polpaar ist in Form eines Permanentmagneten ausgebildet und scheibenförmig ausgeführt. Die zwischen den Permanentmagneten befindliche elektrische Leiterbahn ist als Flachspule ausgebildet und mindestens einlagig auf einem Tragkörper angebracht. Dabei ist jede, auf dem Tragkörper angebrachte, stromdurchfließbare Leiterbahn mindestens mit dem Bereich ihres wirksamen Abschnittes innerhalb der Geometrie der rotierenden Permanentmagnete angeordnet.

Der DE 103 35 688 A1 ist die Gestaltung von Luftspulen, die innerhalb von rotierenden, elektrischen Maschinen vollkommen vom magnetischen Feld durchdrungen werden, zu entnehmen. Diese Gestaltung führt zu elektrischen Maschinen mit hoher Materialausbeutung und großem Wirkungsgrad und hohem Drehmoment bei Motoren. Die Erfindung basiert dabei auf die von Faraday erforschten Idealbedingungen für die direkte Energieumsetzung zwischen magnetischem Feld und Strom durchflossenen Leiter. Dabei sind die Idealbedingungen in Endspulen für verschiedene Betriebe der Spulen in Abhängigkeit von der Anwendung jeweils in einem Höchstmaß umgesetzt.

Elektrische Spulen oder Wicklungen mit einseitig zum Spulenbündel liegendem Stromeingang und Stromausgang und deren Herstellungsverfahren werden in der DE 102 08 566 A1 näher erläutert. Hierbei handelt es sich um den Einsatz in elektrischen Maschinen für eine Gesamtspule oder Gesamtwicklung, die aus mindestens zwei Spulen oder Wicklungen aufgebaut ist, die in Luftspaltrichtung übereinander liegen, zueinander gegensinnig verlaufen oder gegensinnig gewickelt und dabei in Reihe geschaltet sind.

Die Aufgabe der vorliegenden Erfindung besteht darin eine elektrische Vorrichtung zu schaffen, die als Antriebsvorrichtung und/oder als Generator für verschiedenste Anwendungsbereiche bei einem größtmöglichen Wirkungsgrad verwendbar ist und in der Herstellung kostenreduziert ist. Die Leistungssteigerung soll ferner mit einer Bauraumreduzierung und einem einfachen Herstellungsprozess realisiert werden. Dabei soll eine solche Antriebsvorrichtung insbesondere für Türen, Tore und dergleichen verwendbar sein.

Gelöst wir die Aufgabe der Erfindung durch die Merkmale des Anspruches 1. Die Unteransprüche haben weitere konstruktive Ausgestaltungen und verschiedene Anwendungsmöglichkeiten des Lösungsprinzips zum Inhalt.

Zur Kostenreduzierung wird erfindungsgemäß ein modulares elektrisches Antriebskonzept vorgeschlagen, welches aus einzelnen austauschbaren Modulen jeweils unterschiedliche Antriebsvorrichtungen entstehen lässt, die für unterschiedlichste Anwendungen effizient einsetzbar sind. Eine derartige Antriebsvorrichtung weist ein konstantes Drehmoment über den gesamten Drehzahlbereich auf. Ferner ist die Antriebsvorrichtung für eine direkte oder indirekte Antriebsart über seine Achse oder über seine runde Umfangsfläche verwendbar. Dabei sind die Antriebsvorrichtungen so beschaffen, dass sie nutenlos und bürstenlos und damit kommutatorfrei sind. Verwendbar sind derartige Antriebsvorrichtungen für ein- und mehrphasige Spannungsversorgungen.

Um über den gesamten Drehzahlbereich ein konstantes Drehmoment zu realisieren wird auf eine Wicklung zurückgegriffen, die als Modul als flache ringförmige Scheibe nach einem bestimmten Wickelschema ausgeführt ist. Dabei befindet sich die flach ausgebildete Wicklung zwischen Permanentmagnetsystemen, die ebenfalls als Module in so genannten Pollängen zusammengefasst und vorzugsweise in Magnethaltern befestigt sind.

Durch die Erfindung ergibt sich ferner, dass eine derartige Antriebsvorrichtung sowohl für den direkten als auch indirekten Antrieb. In einer bevorzugten Ausführung kann die Achse in Rotation versetzt werden. Darüber hinaus ist es aber auch wahlweise möglich, dass die Achse still steht und zum Antrieb die runde Umfangsfläche verwendet wird. Es können beide Ausführungsformen mit einem Getriebe, insbesondere mit einem Planeten- oder Schneckengetriebe oder dergleichen, ausgestattet werden. Ein derartiges Planetengetriebe kann auch mit in dem umgebenden Gehäuse der Antriebsvorrichtung integriert werden.

Um eine derartige vielfältige Antriebsvorrichtung quasi aus einem morphologischen Kasten auswählen zu können, kann die Antriebsvorrichtung im Wesentlichen aus folgenden Modulen zusammengesetzt werden: einer Wicklung, Magneten, die in Magnethaltern gehalten werden, wobei die Magnete auch mit einem Rückschlussmodul aus einem ferromagnetischen Material versehen sein können, einer Steuer- und Regeleinheit, die Bestandteil der Antriebsvorrichtung ist, was bedeutet, dass sich die Steuer- und Regeleinheit innerhalb der Antriebsvorrichtung befindet, einem Inkrementalgeber, einer Positionsmesseinrichtung, unterschiedlichen Achsen, sowohl Antriebsmodulen als auch Befestigungsmodule und Getriebemodule.

Die Steuer- und Regeleinheit ist so beschaffen, dass sie beispielsweise für unterschiedliche Anwendungsfälle mit unterschiedlichen Programmen ausgestattet werden kann. Derartige Programme beinhalten z.B. eine Anfahrphase und eine Bremsphase der Antriebsvorrichtung je nach Ausführung z.B. für eine Tür oder dergleichen. Der Verlauf der Anfahrphase und der Bremsphase können je nach Bedarf verändert werden. Ferner kann beispielsweise auch die Antriebsvorrichtung in einem Programm den Verlauf einer Fahrstrecke einer angeschlossenen Vorrichtung selbst lernen und anschließend diese Kenndaten selbst abspeichern. Zu den erlernbaren bzw. veränderbaren Parametern gehören auch eine Drehzahlbegrenzung, eine Strombegrenzung bzw. eine Kraftbegrenzung. Diese Programme sind dann vorzugsweise in mindestens einem nicht flüchtigen Speicher gespeichert. Je nach Anwendungsfall und Zusammenstellung der Antriebsvorrichtung aus den einzelnen Modulen wird eine geeignete Software programmiert.

Die Wicklung ist als freitragende, ohne Träger ausgeführte flache, ringförmige Scheibenwicklung anzusehen. Die Scheibenwicklung ist als selbsttragende Luftspule mit mindestens zwei getrennten Wicklungen ausgeführt, wobei je nach Anzahl der Phasen auch mehrere Wicklungen ausgeführt werden können und somit ein Mehrphasenbetrieb möglich ist. Die einzelnen Wicklungen sind bifilar und gleichzeitig meanderförmig gewickelt und zwar in der Art, dass eine Bifilarität nicht gegensinnig ausgeführt wird. So werden die einzelnen Wicklungen bifilar gewickelt und gleichsinnig in Reihe geschaltet, so dass eine Scheibenwicklung geschaffen wird, die mit einer doppelten Windungszahl eine etwa vierfache Induktivität gegenüber herkömmlichen Spulen aufweist. Durch eine derartige Wickelanordnung wird erreicht, dass im Arbeitsspalt sich die magnetischen Felder addieren und gleichzeitig im Wickelkopf diese sich aufheben. Durch das Aufheben der elektrischen Felder in den Wickelköpfen werden Verluste reduziert, die sonst in Wärme umgesetzt werden. Diese Skalar-Feldaufspaltung der einzelnen Wicklungen führt dazu, dass es in bestimmten Bereichen der Wicklung zu einer Verstärkung bzw. zu einer Schwächung des elektrischen Feldes kommt. Das Leitermaterial für die einzelnen Wicklungen besteht vorzugsweise aus einer oder einer Mehrzahl von verdrillten Litzen. Ein solches Wickelschema bedeutet bei geringerem Bauraum eine höhere Leistung der Antriebsvorrichtung.

Die als Scheibe ausgeführte Wicklung der Spule weist in einer bevorzugten Ausführungsform keinen rechteckigen Querschnitt auf, sondern ausgehend von einem Spulenfuß nach außen hin, d. h. zum größer werdenden Durchmesser, weist eine derartige Spule einen sich verjüngenden Querschnitt auf. Ein solcher Querschnitt ist im Wesentlichen nach einer bevorzugten Ausführungsform trapezförmig oder kegelstumpfförmig oder mit einem konischen oder hyperbolischen Verlauf in seinen seitlichen Außenbereichen versehen.

Der Vorteil einer derartigen Spule, die aus mehreren Wicklungen bestehen kann und für einen mehrphasigen Betrieb geeignet ist, weist einen wesentlich höheren Kupferfüllgrad auf. Durch die Querschnittsform kommt sowohl im Außenbereich als auch im Innenbereich ein gleichmäßigerer Kupferfüllgrad zum Tragen. Dieses bedingt geringere Verlustleistungen, insbesondere in dem Bereich des Spulenkopfes. Gleichzeitig sind Spulen mit einem derartigen Querschnitt dazu geeignet, eine bessere Wärmeableitung zu bewirken und damit eine höhere Belastung insgesamt aushalten zu können.

Durch die im Wesentlichen konische oder trapezförmige Form des Querschnittes der Spule bildet sich auch ein konisch geprägter Arbeitsspalt zwischen den seitlich angeordneten Dauermagnetsystemen. Dabei ist der Luftspalt zwischen den Magneten und der Oberfläche der Spule annähernd parallel. Aufgrund der sich nach außen hin verjüngenden Spule kommen die seitlichen Dauermagnetsysteme näher zusammen, insbesondere im sich verjüngenden Bereich der Spule und erhöhen somit die Feldstärke. Eine Erhöhung der Feldstärke beinhaltet gleichzeitig eine Leistungssteigerung der elektrischen Maschine.

Den Luftspalt zwischen der Oberfläche der Spulen und der Oberfläche der Magnete wird auch dafür verwendet, um hier entsprechende Kühlluft durchtreten zu lassen. Dadurch, dass die Wärmediffusionslänge von der sich verjüngenden Spule von der Spulenmitte bis zur Oberfläche geringer ist, wird ebenfalls eine bessere Wärmeableitung erzielt.

Dabei wird die verwendete ringförmige Spule bei einem Außenläufer auf einem Träger an der Achse stehend gehalten bzw. bei einem Innenläufer, bei dem sich die Achse dreht, wird eine derartige Spule außen im Bereich des Gehäuses stationär gehalten.

Eine derartige elektrische Maschine, die sowohl als Motor als auch als Generator verwendbar ist, ist so ausgebildet, dass diese mit einer stehenden selbsttragenden Luftspule mit mindestens zwei Wicklungen realisiert wird. Jeweils nach Anzahl der Phasen sind auch mehrere Wicklungen möglich, so dass eine derartige Spule auch austauschbar ist. Dabei sind die einzelnen Wicklungen vorzugsweise bifilar und gleichzeitig meanderförmig so gewickelt, dass die Bifilarität nicht gegensinnig ausgeführt wird. So werden die einzelnen Wicklungen bifilar bewickelt und gleichsinnig in Reihe geschaltet, so dass sich eine Spule ergibt, die mit einer doppelten Windungszahl eine etwa vierfache Induktivität gegenüber herkömmlichen Spulen aufweist. Durch eine derartige Wickelanordnung wird ferner erreicht, dass in dem Arbeitsspalt neben der sich nach außen hin im Querschnitt verjüngenden Form der Spule ebenfalls die magnetischen Felder addieren.

Derartige Wicklungen werden mittels eines entsprechenden temperaturresistenten Harzes getränkt, wobei das Harz auch noch mit beispielsweise Glasfasern verstärkt werden kann. Zur Erhöhung der Standfestigkeit der Spule kann diese noch mit einem Gewebe, zumindest im Außenbereich versehen werden. Ein solches Gewebe kann beispielsweise aus Glasfasern oder einer Glasfasermatte bestehen.

In einem weiteren Schritt kann zur Erhöhung des Wirkungsgrades der Antriebsvorrichtung das Harz oder die Vergussmasse, die zur Halterung der einzelnen Wickeldrähte verwendet werden, auch noch mit einem Grafitpulver oder -granulat oder mit einem ferromagnetischen Werkstoff versetzt und damit angereichert werden.

In einem weiteren erfinderischen Schritt wird vorgeschlagen, dass die verwendeten Permanentmagnetsysteme vorzugsweise aus einem Magnetwerkstoff der Seltenen Erden bestehen. Diese Magnetwerkstoffe stehen für eine hohe Effizienz und garantieren mit den beschriebenen Wicklungsarten und einem kleinen, geringen Luftspalt zwischen der Wicklung und den Permanentmagneten einen hohen Wirkungsgrad für derartige elektrische Vorrichtungen. Als Magnetmaterial werden isotrope Materialien mit einer im zweiten Quadranten annähernd linearen Kennlinie verwendet. Ferner können auch Materialien verwendet werden, bei denen die Koerzitivfeldstärke wesentlich größer ist als das Verhältnis von Remanenz zur magnetischen Feldkonstanten. Bei derartigen Materialien handelt es sich um gesinterte oder kunststoffgebundene Ferrite oder Seltene-Erden-Magnete.

Der mit der Wicklung, die z.B. den stationären Stator darstellt, zusammenwirkende Läufer, besteht im Wesentlichen aus Dauermagnetsystemen, die sich aus einer mehrfachen Pollänge mit wechselnder Polarität (Nord/Süd) ohne Eisen dazwischen ringförmig zusammensetzen. Eine Pollänge besteht aus mehreren nach einem bestimmten Schema magnetisierter und angeordneter Dauermagnete. Die Dauermagnete sind dabei so angeordnet, dass sie innerhalb einer Pollänge an einer zu der Wicklung gerichteten Polfläche einen gerichteten, verstärkten, magnetischen Fluss aufweisen. Dieses trägt ebenfalls zu einer Erhöhung des Wirkungsgrades der Antriebsvorrichtungen bei.

Um einen derartigen, verstärkten, magnetischen, gerichteten Fluss zu erreichen, ist die Pollänge so bemessen, dass diese sich vorzugsweise aus je einer Länge von zwei gleich langen Magneten plus einem kürzeren Magneten zusammensetzt. Vorzugsweise ist die Länge des kürzeren Magneten als die halbe Länge der vor genannten gleichlangen Magneten bemessen.

Um die gezielte Richtung des magnetischen Flusses noch zu intensivieren, befindet sich zur Polfläche der beiden gleichlangen Magnete gerichtet ein weiterer Magnet, der jedoch nur eine geringe Polhöhe aufweist, vorzugsweise im Wesentlichen die Viertelhöhe der vor genannten Magnete. Somit besteht eine Pollänge aus vorzugsweise vier Magneten, deren Magnetisierungsrichtungen so gewählt worden sind, dass an dem flachen Magnet und damit an seiner Polfläche ein verstärkter gerichteter magnetischer Fluss vorhanden ist. Bei der unterschiedlichen Vorzugsmagnetisierung handelt es sich um ein so genanntes Halbachsystem. Ein derartiges Halbachmagnetsystem erzeugt ein besonders homogenes Magnetfeld. Bei der erfindungsgemäßen Permanentmagnetanordnung erhält somit quasi jeder einzelne Permanentmagnet eine bestimmte Vorzugsmagnetisierungsrichtung. Hierdurch ergibt sich aufgrund der Größe der einzelnen Magnete eine Abweichung von der Homogenität des im Bereich des in der Wicklung erzeugten magnetischen Feldes. Um eine Abweichung im Magnetfeld so gering wie möglich zu halten, ist es deshalb notwendig, eine feine Segmentierung vorzunehmen. Dadurch vergrößert sich zwar der Herstellungsaufwand, aber es entsteht ein homogeneres Magnetfeld mit einer großen Steigerung des Wirkungsgrades.

Dadurch, dass das gesamte Magnetsystem aus einer Vielzahl von dicht aneinander angeordneten Permanenteinzelmagnetsystemen besteht, ist es notwendig, dass die Vorzugsmagnetisierungsrichtung auch innerhalb der einzelnen Segmente örtlich variiert.

Jede Pollänge hat eine wechselnde Polarität, d.h. es wechseln sich bei jeder nachfolgenden Pollänge Nordpol und Südpol ab, wobei die einzelnen Pollängen direkt ohne Lücken und Zwischenpolen aus Eisen oder dergleichen sich an einander reihen.

Auf der gegenüberliegenden Seite (Rückseite zur Polfläche) der einzelnen Magnete kann sich eine ferromagnetische Abschirmung befinden, die nur eine geringe Dicke aufweisen muss, da in diesem Bereich kein großer magnetischer Fluss vorhanden ist, weil eine magnetische Flussabschwächung durch die gewählten magnetischen Richtungen der Pole der einzelnen Magnete vorhanden ist. In bestimmten Fällen kann jedoch auch ein magnetischer Rückschluss vorhanden sein. Elektrische Vorrichtungen der vorgenannten Art können je nach Leistung auch mit einem Kühlsystem ausgestattet sein. Erfindungsgemäß wird in einer ersten bevorzugten Ausführungsform eine elektrische Vorrichtung mit einer scheibenförmigen Ausbildung, einer ringförmigen stehenden Wicklungsanordnung verwendet, die mit einer thermoplastischen Isolation versehen bzw. überzogen ist. Mindestens auf einer Seite der Wicklung befindet sich durch einen Luftspalt beabstandet das Permanentmagnetsystem, welches eine Rotationsbewegung beim Bestromen oder aber in der Generatorform beim Antreiben der Permanentmagnetsysteme erwirkt. Dabei ist zur Kühlung der Wicklungsanordnung bei dieser bevorzugten Ausführungsform die elektrische Maschine mit einer Hohlwelle ausgestattet, in der entsprechende Durchbrüche vorhanden sind, die ein Ansaugen der Kühlströme aufgrund der Rotation des Permanentmagnetsystems bewirken. Dabei werden die Kühlströme so geleitet, dass diese zwischen der Wicklungsanordnung und dem Permanentmagnetsystem durch einen Luftspalt geleitet werden. Auf ihrem Umfang weist die scheibenförmige elektrische Maschine Durchbrüche auf, aus denen die, durch die Verlustleistung innerhalb des Wicklungssystems entstandene Wärme, die Luftströme abgeführt werden.

In einer weiteren bevorzugten Ausführungsform kann der gleiche Aufbau der elektrischen Vorrichtung wie vor beschrieben verwendet werden, nur dass beispielsweise entsprechende Ansaugbohrungen oder Kanäle sich auf den äußeren Seitenflächen der elektrischen Maschine im Gegensatz zu der vor beschriebenen Ausführung in der Hohlwelle befinden. Auch bei den seitlichen Ansaugbohrungen wird in gleicher Art und Weise die Flussrichtung der Kühlströme durch die Rotationsbewegung der elektrischen Vorrichtung vorgegeben.

Es versteht sich, dass bei der vor beschriebenen und bei den nachfolgenden bevorzugten Ausführungsbeispielen es neben einer quasi einseitigen Ausführung von Permanentmagnetsystemen zu der Wicklungsanordnung mit dem dazwischen vorhandenen Luftspalt auch zu einer auf jeder Außenseite der Wicklungsanordnung angeordneten Permanentmagnetsysteme kommen kann. Es versteht sich, dass bei einer solchen Anordnung von beidseitigen Permanentmagnetsystemen durch jeden der Luftspalte seitlich der Wicklungsanordnung entsprechende Kühlströme geleitet werden.

Um einen effektiven Kühlstrom innerhalb der elektrischen Vorrichtung u können, sind auf der Wicklungsanordnung in der Oberfläche Strömungsleitungen, vorzugsweise schaufelartig in mehrfacher Anzahl angeordnet.

In einer weiteren bevorzugten Ausführungsform sind ebenfalls Strömungsleitungen auf der Oberfläche der Permanentmagnetsysteme als Strömungsleitungen der gleichen Art wie auf der Oberfläche der Wicklungsanordnung vorhanden. Sowohl bei der Ausführung auf der Oberfläche der Wicklungsanordnung als auch auf den Dauermagnetsystemen besteht diese Strömungsleitungsanordnung aus einer mikrostrukturierten Oberfläche, die mittels des thermoplastischen Kunststoffes geschaffen wird. Dabei sind vorzugsweise die Strömungsleitungen der Wicklungsanordnung und der Permanentmagnetsysteme gegenläufig, so dass eine Verstärkung der Kühlströme durch die Rotationsbewegung erreicht wird.

In einem weiteren bevorzugten Ausführungsbeispiel kann die Ansaugung der Kühlströme über eine Achse der elektrischen Vorrichtung wobei die Achse so ausgebildet ist, dass diese er einen Seite das Ansaugen der Kühlströme gestattet und andererseits, nachdem die Kühlströme die Wicklungsanordnung umströmt haben, auch auf der Seite der stehenden Achse wieder ausgeblasen werden können.

Die vor beschriebenen Kühlsysteme werden im Sinne der Erfindung als direkte Kühlsysteme bezeichnet, weil sie eine Ansaugung der Kühlluft außerhalb der elektrischen Vorrichtung durchführen und gleichzeitig die erwärmte Luft auch wieder an die Umgebung abgeben.

In einer weiteren bevorzugten Ausführungsform kann auch ein indirektes Kühlsystem zur Anwendung kommen. Als indirektes Kühlsystem wird ein System von Kühlströmen bezeichnet, die weder eine Ansaugung noch einen Austritt nach außen hin aufweisen. Dabei können durch eine Ausbildung von Strömungskanälen hinter den Permanentmagnetsystemanordnungen in Verbindung mit einer Strömungsumkehr über eine teilweise hohle Welle bzw. über Verbindungsbohrungen im Gehäuse einen inneren Kreislauf für entsprechende Kühlströme herstellen. Es versteht sich, dass bei einem indirekten Kühlsystem auf der Oberfläche des Gehäuses der elektrischen Maschine Kühlrippen oder dergleichen vorhanden sein können.

Um einen hohen Wirkungsgrad der aus verschiedenen Modulen zusammengesetzten Vorrichtung zu erreichen, ist es ebenfalls notwendig eine Steuer- und Regeleinheit als Modul zu verwenden, die auf die Wicklung und die damit zusammenwirkenden Permanentmagnetsysteme genau abgestimmt ist. Diese Abstimmung wird über eine gespeicherte Software erreicht, die für unterschiedlichste Anwendungsfälle umprogrammierbar ist.

Die Steuer- und Regeleinheit kann als Modul innerhalb der Antriebsvorrichtung integriert sein, oder auch als Modul außerhalb vorhanden sein. Ferner können auch ein Inkrementalgeber und/oder eine Positionsmesseinrichtung als Module innerhalb der Antriebsvorrichtung integriert werden, um so eine kompakte Vorrichtung zu bilden.

Bei einer bevorzugten Ausführungsart der erfindungsgemäßen Vorrichtung soll die Achse oder Welle stehen, was gleichzeitig bei einer Hohlwelle die Zuführung der elektrischen Anschlüsse vereinfacht. Auf der Achse oder Welle sind durch entsprechende Lagerung Magnethalter drehbar gelagert, wobei sich zwischen den Magnethaltern mit den Magneten die bereits vor beschriebenen Wicklungen als stehende Scheibenspule befindet. Bei einer derartigen Ausführung würden sich bei einem Anschluss der Steuer- und Regeleinheit an eine Spannungsquelle die Magnethalter um die Achse drehen. Dieses hat gleichzeitig zur Folge, dass die, beispielsweise gegeneinander verschraubten Magnethalter in einer runden Form auf ihrer Umfangsfläche als Antriebsfläche verwendet werden können. Dabei ist es grundsätzlich möglich, diese runde Umfangsfläche direkt zu verwenden oder so auszubilden, dass sie beispielsweise mit einer Verzahnung versehen ist. Eine derartige Verzahnung eignet sich dafür, um beispielsweise einen Zahnriemen anzutreiben oder mit einem entsprechenden Getriebe zusammenzuwirken.

Es ist jedoch auch möglich, die Umfangsfläche mit einem Reibbelag beispielsweise in Form eines Gummibelages zu versehen, um mit dem äußeren Belag einen Antrieb zu realisieren.

In einer weiteren Ausgestaltung kann die Umfangfläche auch eine oder mehrere Vertriefungen haben, in denen entweder Riemen oder Ketten oder dergleichen laufen bzw. diese Umfangsflächen direkt dazu verwendet werden, um beispielsweise auf Schienen oder dergleichen die Fortbewegung der Vorrichtung zu bewirken.

Neben der vor beschriebenen universellen Ausführbarkeit der Module für die Magnethalter ist es möglich, dass die Magnethalter eine glatte, runde Umfangsfläche aufweisen und durch entsprechende Module, die je nach Antriebsart unterschiedlich ausgebildet sind, zu komplettieren. Auch hier kann wieder ein glattes Modul bzw. ein Modul mit einem Reibbelag bzw. einer Verzahnung oder einer Vertiefung zur Anwendung kommen. Befestigt werden derartige, nachträglich aufgesetzte Module über entsprechende Schraubverbindungen, so dass diese Module schnell gewechselt bzw. je nach gewünschter Konzeption der Antriebsvorrichtung universell zusammengestellt werden können, verwendet.

In einer weiteren bevorzugten Ausführungsform kann die feststehende Welle auch mit einem entsprechenden Flansch versehen werden, der es ermöglicht, diesen Flansch an einem ortsfesten Teil kraft- und formschlüssig anzubringen, um über die Umfangsfläche der Vorrichtung eine entsprechende Antriebsausführung darzulegen.

In einer weiteren bevorzugten Ausführungsform kann die bereits vor beschriebene Umfangsfläche auch mit Getrieben unterschiedlichster Bauart versehen werden, um somit eine Änderung der Drehzahl und damit gleichzeitig Anpassung des Drehmomentes an geforderte Ausführungen zu bewirken.

In einer weiteren bevorzugten Ausführungsform kann auch seitlich, das heißt an einer der Stirnflächen bzw. auch an beiden Stirnflächen, der in Rotation befindlichen Magnethalter, jeweils ein Getriebe aufnehmen. Ein derartiges Getriebe kann vorzugsweise ein Planetengetriebe sein. Bei einem derartigen Planetengetriebe würde sich das Hohlrad drehen und ebenso das Sonnenrad.

Bei einer Ausführung, bei der auf beiden Stirnflächen der doppelt vorhandenen Magnethalter ein unterschiedliches Planetengetriebe vorgeflanscht würde, wäre es möglich, dass mit einer solchen Antriebsvorrichtung auf jeder Seite unterschiedliche Antriebsarten, das heißt mit unterschiedlichen Drehzahlen realisiert werden kann.

In einer weiteren bevorzugten Ausführungsform ist es möglich, dass die ringförmig ausgeführte Scheibenwicklung als Modul so befestigt wird, dass diese an ihrem äußeren Umfang innerhalb von Gehäuseschalen festgelegt wird. Auch in diesem Falle steht die Wicklung. Auf der sich bei dieser Ausführungsform drehenden Achse sind die Magnethalter in einem äußeren Gehäuse festgesetzt, so dass sie durch die magnetischen Kräfte, erzeugt durch das Anlegen der elektrischen Spannung an die Wicklung, eine Rotation der Welle ausführen.

Auch bei der vor beschriebenen Ausführungsform ist es möglich, entsprechende Sensoren bzw. Inkrementalgeber oder Positionsmesseinrichtungen oder Steuerung als Module innerhalb des Gehäuses der Antriebsvorrichtung zu platzieren.

In einer weiteren bevorzugten Ausführungsform ist es möglich, auf die vor beschriebene Achse beispielsweise ein Planetengetriebe aufzusetzen, bei dem das Sonnenrad angetrieben wird und somit es zu einer Drehung des Hohlrades kommt. Auch in diesem Falle kann der äußere Umfang des Hohlrades so hergerichtet werden, dass beispielsweise ein Reibbelag oder eine Verzahnung oder dergleichen angebracht werden.

In einer weiteren bevorzugten Ausführungsform kann die Welle an dem austretenden Ende der Antriebsvorrichtung mit einem Schneckentrieb verbunden oder direkt ausgeführt sein.

Es versteht sich, dass bei einem weiteren bevorzugten Ausführungsbeispiel auch auf der Achse der Antriebsvorrichtung eine Verzahnung vorhanden sein kann, die direkt mit einem Getriebemodul verbunden werden kann.

Die vor beschriebenen, nicht abschließend aufgezählten möglichen Ausführungen für eine umfangreiche Antriebskonstruktion zeigen, dass durch die unterschiedlichste Kombination von modularen unterschiedlichen Modulen in Verbindung mit Grundmodulen, nämlich der Wicklung und den Magnethaltern, unterschiedlichste elektrische Vorrichtungen als elektrische Maschinen oder Generatoren entstehen können. So ist insbesondere mit der gleichen Antriebskonzeption es möglich, eine Antriebsart sowohl direkt als auch indirekt über die Achse, als auch über die Umfangsfläche zu realisieren.

Ein besonderes Einsatzgebiet derartiger elektrischer Vorrichtungen ist das Gebiet der Türen, Tore, verfahrbaren Wandelemente usw.

Bei einer konkreten Anwendung in einer bevorzugten Ausführungsform wird die elektrische Vorrichtung mit einer feststehenden Achse ausgebildet, so dass die äußere Umfangsfläche direkt oder indirekt auf eine Laufschiene einwirkt, an der die einzelnen horizontal veränderbaren Wandelemente aufgehängt sind. Derartige Laufschienen sind deckenseitig angeordnet.

Zur Übertragung des Drehmomentes der Antriebseinheit kann diese auf der Umfangsfläche eine Verzahnung aufweisen, die mit einer Verzahnung der Laufschiene zusammenwirkt. Dabei ist es möglich, dass die Verzahnung der Laufschiene innerhalb der Laufschiene integriert ist, oder aber als zusätzliches Bauteil in oder an der Laufschiene auswechselbar zugeordnet ist bzw. dass innerhalb der Laufschiene ein Zahnriemen oder dergleichen auswechselbar eingebettet ist. Durch das Vorhandensein entsprechender Verzahnungen ist sichergestellt, dass das Drehmoment kraft- und formschlüssig direkt übertragen wird.

Es ist jedoch auch möglich, dass die Verzahnung durch einen entsprechenden Laufbelag ersetzt wird, wobei dieser Laufbelag aus Gummi oder einer Gummiverbindung besteht und somit als Reibradantrieb anzusehen ist. Dieses ist insbesondere bei kleineren, nicht so schweren Wandelementen möglich.

Ein weiteres bevorzugtes Einsatzgebiet kann der Bereich der Karusselltüren sein, wo zur Reduzierung der Höhe des Stirnbandes die erfindungsgemäße Vorrichtung eingesetzt werden kann.

Die Erfindung wird nachfolgend in den Zeichnungen anhand von schematischen Darstellungen für unterschiedlichste Ausführungsformen und -beispiele eines modularen Antriebskonzeptes wiedergegeben.

Es zeigt:

Figur 1: Einen Schnitt durch eine elektrische Vorrichtung in einer ersten bevorzugten Ausführungsform;

Figur 2: wie Figur 1 mit einem integrierten Inkrementalgeber und einer Positionsmesseinrichtung;

Figur 3: einen Ausschnitt aus dem Umfangsbereich der Ausführungsbeispiele gemäß Figur 1 und 2 mit einer Verzahnung;

Figur 4: wie Figur 3, jedoch mit einem Reibbelag;

Figur 5: wie Figur 3, jedoch mit einer Vertiefung;

Figur 6: ein Zusatzmodul für eine Antriebsart, welches auf die Ausführungen der Figuren 1 und 2 adaptiv aufgesetzt werden kann, mit einer Vertiefung;

Figur 7: wie Figur 6, jedoch mit einem Reibbelag;

Figur 8: wie Figur 6, jedoch mit einer Verzahnung

Figur 9: eine weitere bevorzugte Ausführungsform mit einem Befestigungsflansch;

Figur 10: Magnethalter, die mit Rückschlussmodulen versehen sind;

Figur 11: eine weitere bevorzugte Ausführungsform mit einer geteilten Welle und einem angesetzten Modul als Planetengetriebe;

Figur 12: eine weitere bevorzugte Ausführungsform, bei der die Achse sich dreht;

Figur 13: wie Figur 12, jedoch mit einem vorgesetzten Planentengetriebemodul;

Figur 14: eine weitere bevorzugte Ausführungsform einer Antriebsvorrichtung;

Figur 15: eine bevorzugte Spulenausführung mit seitlichen Magnete in der Schnittdarstellung;

Figur 16: eine Ausführung eines Wicklungsmodules;

Figur 17: eine weitere bevorzugte Ausführungsform eines Wicklungsmodules;

Figur 18: eine erste mögliche Ausführungsform eines Aufbaues einer Pollänge mit einem gerichteten magnetischen Fluss;

Figur 19: eine zweite bevorzugte Ausführungsform einer Magnetanordnung mit einem gerichteten magnetischen Fluss;

Figur 20: ein bevorzugtes Wickelschema für eine Wicklung;

Figur 21: eine Ausführung einer Aufhängung einer ortsveränderlichen Wand;

Figur 22: wie Figur 21, jedoch in der Seitenansicht;

Figur 23: eine Ausschnittsdarstellung eines Antriebes einer Karusselltür;

Figur 24: eine erste bevorzugte Ausführung einer Belüftung der elektrischen Vorrichtung;

Figur 25: eine zweite bevorzugte Ausführung einer Belüftung der elektrischen Vorrichtung;

Figur 26: eine Draufsicht auf eine Wicklungsausführung mit Strömungsleitungen;

Figur 27: eine dritte bevorzugte Ausführung einer Belüftung der elektrischen Vorrichtung;

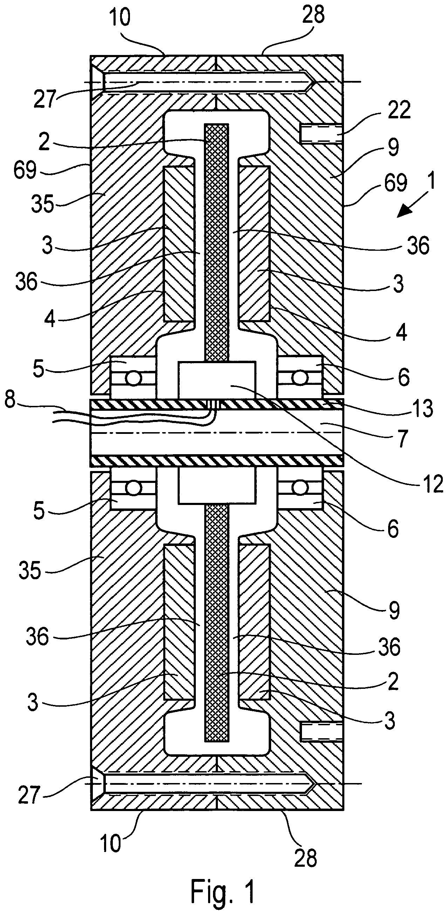

In der Figur 1 wird in einer schematischen Darstellung ein mögliches erstes bevorzugtes Ausführungsbeispiel einer elektrischen Vorrichtung gezeigt, die im nachfolgendem der Übersichtlichkeit als Antriebsvorrichtung 1 allgemein bezeichnet wird. Bei den Darstellungen sind nur die Elemente wiedergeben worden, die für die vorliegende Erfindung relevant sind.

Auf einer Achse 13, die als Hohlwelle 7 ausgeführt ist, ist über Lager 5, 6 ein drehender Bereich, nämlich bestehend aus Magnethaltern 9 und 35 zu entnehmen. Die Magnethalter 9 und 35 sind an ihrem äußeren Bereich durch Verschraubungen 27 miteinander verbunden. Die Magnethalter 9 und 35 sind so ausgebildet, dass sie innerhalb von Taschen 4 eingebettete Permanentmagnetsysteme 3 so platzieren, dass dies auch bei einer hohen Umfangsgeschwindigkeit ihre Position nicht verlassen. Zwischen den Dauermagnetsystemen 3 ist über jeweils seitliche Luftspalte 36 eine Wicklung 2 einer ringförmigen Spule platziert. Die Wicklung 2 ist fest mit der Achse 13 verbunden und in diesem Ausführungsbeispiel befindet sich zwischen der Achse 13 und dem Wicklungsmodul 2 ein Modul einer Steuer- und Regeleinheit 12. Die Steuer- und Regeleinheit 12 wird mit elektrischer Energie über elektrische Anschlüsse 8 versorgt, die in diesem Ausführungsbeispiel der Figur 1 durch die Hohlwelle 7 angeschlossen werden.

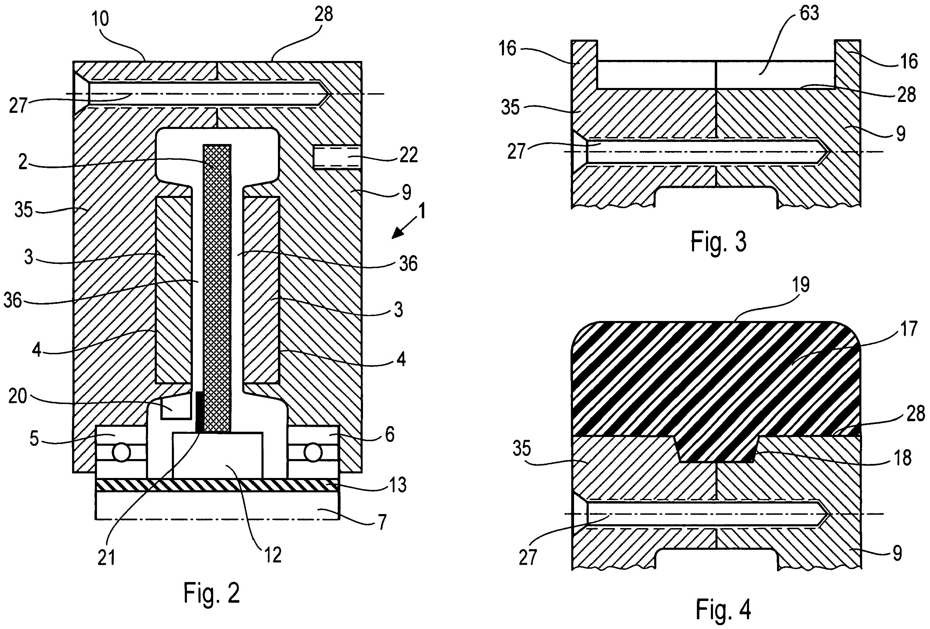

Wie durch die vorhergehende Beschreibung verdeutlicht wird, wird durch die Verwendung von austauschbaren Modulen, wie den Magnethaltern 9, 35 mit den Lagern 5, 6 und der Wicklung 2 und der Steuer- und Regeleinheit 12 eine Antriebsvorrichtung 1 geschaffen, die von höchster Effizienz ist. Dabei drehen sich bei diesem Ausführungsbeispiel der Antriebsvorrichtung 1 die Magnetsysteme 3 um die Achse 13. Dieses bedeutet, dass als wirksame Antriebskomponente eine Umfangsfläche 28, die sich an der äußeren Fläche 10 der Magnethalter 9, 35 befindet, vorhanden ist. Über diese Umfangsfläche 28 kann eine Antriebsweise von unterschiedlichster Ausführungsart ausgeführt werden. So kann die Umfangsfläche 28 je nach Anwendungsart direkt zum Antrieb verwendet werden. Es ist jedoch auch möglich, entsprechend beispielsweise einer bevorzugten Ausführungsform der Figur 3 diese Umfangsfläche gleichzeitig so zu gestalten, dass beispielsweise eine Verzahnung 63 auf der Umfangsfläche 28 und damit auf den beiden spiegelbildlich verwendeten Magnethaltern 9, 35 vorhanden ist. Eine derartige Verzahnung 63 kann durch seitliche Antriebsmittelsicherungen 16 in Form von Stegen beispielsweise für die Verwendung eines Zahnriemens oder dergleichen eingesetzt werden. Es ist jedoch auch möglich, dass diese Verzahnung 63 direkt in andere Verzahnungen eingreift und somit die Antriebsvorrichtung 1 zum Bestandteil eines weiteren Antriebskonzeptes werden lässt.

In einer weiteren bevorzugten Ausführungsform ist in der Figur 4 der Bereich der Umfangsfläche 28 der Antriebsvorrichtung 1 anders ausgestaltet. Innerhalb der Umfangsfläche 28 ist eine Vertiefung 18 vorhanden, die dazu dient, einen Laufbelag 17, der vorzugsweise aus Kunststoff oder einer gummiartigen Mischung oder dergleichen besteht, zu halten. Der Laufbelag 17 hat an dem äußeren Umfang eine Lauffläche 19, die dafür verwendet wird, um beispielsweise in Form eines Reibradantriebes die Antriebsvorrichtung 1 bei einem Antrieb einer Karusselltür zu verwenden.

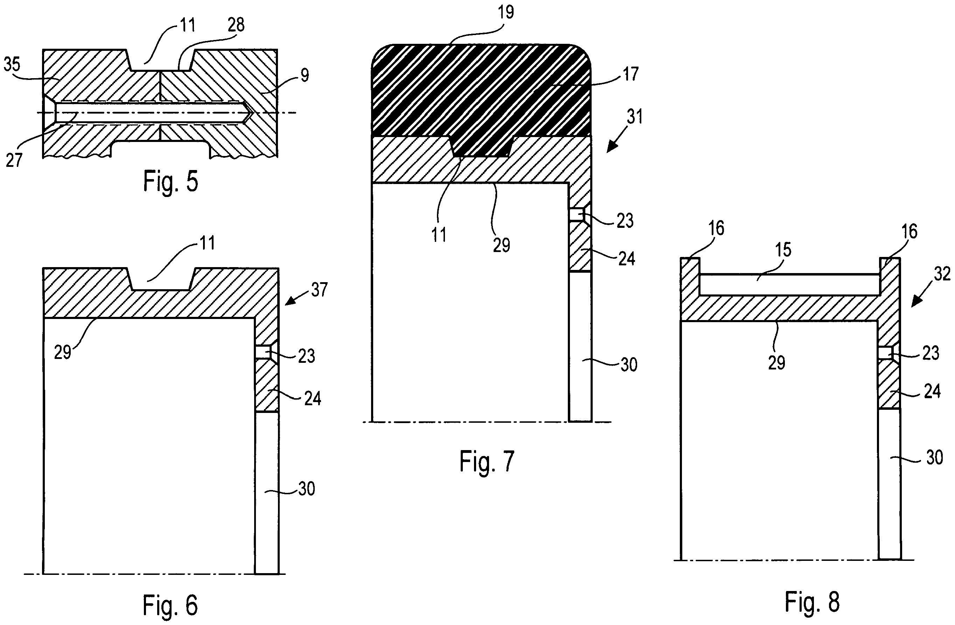

In einer weiteren bevorzugten Ausführungsform wird in der Figur 5 eine weitere Ausgestaltung der Umfangsfläche 28 wiedergegeben. Bei dieser Ausführungsform ist die Umfangsfläche 28 durch eine Vertiefung in Form einer Lauffläche 11 dargestellt. Innerhalb dieser Lauffläche 11 können beispielsweise Keilriemen oder dergleichen eingelegt werden, um somit einen Antrieb oder einen Generator zu realisieren. Es ist jedoch auch möglich, dass die Antriebsvorrichtung 1 direkt mit einer Laufschiene über die Lauffläche 11 in Verbindung steht.

Während bei den Ausführungsbeispielen der Figuren 3, 4 und 5 die Magnethalter 9 und 35 gleich ausgeführt sind, und als spezielle Module mit den unterschiedlichsten Umfangsflächen 28 ausgestattet sind, gibt es eine weitere Möglichkeit in einer weiteren bevorzugten Ausführungsform, um die Antriebsvorrichtung 1 auch universeller zu verwenden. Dieses ist der Figur 6 in einer weiteren bevorzugten Ausführungsform zu entnehmen. In der Figur 6 ist ein Antriebsmodul 37 dargestellt, das als Ringmodul ausgebildet ist. Dieses Ringmodul des Antriebsmoduls 37 wird auf die Umfangsfläche 28 der Antriebsvorrichtung 1 gesetzt, so dass eine Verbindungsfläche 29 eines inneren Durchmessers des Antriebsmoduls 37 mit der Umfangsfläche 28 zusammenfällt. Verbunden wird das Antriebsmodul 37 über Befestigungsbohrungen 23, die mit entsprechenden Gewindebohrungen 22, die in dem Magnethalter 9 beispielsweise in einer Seitenfläche 69 vorhanden sind, übereinstimmen. Das Antriebsmodul 37 ist so ausgestattet, dass es an seinem Umfang eine Lauffläche 11 aufweist, die in Form eines Rücksprunges oder einer Vertiefung, in analoger Form zu der Figur 5, eingebracht ist. Es versteht sich, dass die Anwendung in gleicher Art und Weise wie bei der Figur 5 zu sehen ist.

Die Figur 7 zeigt in einer weiteren bevorzugten Ausführungsform ein Antriebsmodul 31, das in seiner Grundausführung dem Antriebsmodul 37 entspricht, wobei jedoch der äußere Umfang durch den Laufbelag 17 mit der Lauffläche 19 komplettiert worden ist, um so aus der Antriebsvorrichtung 1 entsprechend dem Ausführungsbeispiel der Figur 4 ebenfalls eine Antriebsvorrichtung zu schaffen, die einen Reibradantrieb gestattet.

In einer weiteren bevorzugten Ausführungsform wird in der Figur 8 ein Antriebsmodul 32 wiedergegeben, dass vergleichbar an seinem Umfang mit der Ausführung der Figur 3 ist, da hier eine Verzahnung 15 für einen Zahnriemen oder dergleichen vorhanden ist.

Die Ausführungsbeispiele der Figuren 6, 7 und 8 zeigen, dass die Antriebsvorrichtung 1 so universell gestaltet ist, dass diese durchaus mit dem Auswechseln der Antriebsmodule 31, 32 und 37 für unterschiedlichste Anwendungsbereiche verwendet werden können. Es sei noch darauf hingewiesen, dass bei den Antriebsmodulen 31, 32 und 37 in einem seitlichen Flansch 24, in dem sich auch die Befestigungsbohrungen 23 befinden, ein Ausschnitt 30 vorhanden ist, der jedoch nicht zwingend notwendig ist und je nach Anwendungsfall entfallen kann. Nur bei dem Vorhandensein des Ausschnittes 30 ist es möglich, an die Hohlwelle 7 der Achse 13 heranzukommen.

Während bei den vorausgegangenen bevorzugten Ausführungsbeispielen auf den äußeren Teil der Antriebsvorrichtung 1 Bezug genommen worden ist, wenden wir uns nun dem inneren Teil der Antriebsvorrichtung 1 zu, der gemäß der Figur 2 mit einem Inkrementalgeber 20 und/oder einer Positionsmesseinrichtung 21 versehen ist. Durch die Integration des Inkrementalgebers 20 und/oder der Positionsmesseinrichtung 21 ist es möglich, dass beim Einsatz der Antriebsvorrichtung 1 innerhalb einer weiteren Vorrichtung z.B. einer Tür oder dergleichen stets die genaue Position erfasst werden kann. Es sei angemerkt, dass innerhalb der Wicklung 2 beispielsweise Hallgeneratoren platziert werden können, um als Sensoren zu fungieren. Darüber hinaus ist es erfindungsgemäß möglich, innerhalb der Antriebsvorrichtung 1 andere Sensoren zu platzieren.

Die Signale der Sensoren sowie auch der Positionsmesseinrichtung 21 und des Inkrementalgebers 20 werden direkt in der integrierten Steuer-und Regeleinheit 12 der Antriebsvorrichtung 1 verarbeitet. Die Steuer- und Regeleinheit 12 ist so aufgebaut, dass diese für unterschiedlichste Versorgungsspannungen ausgelegt ist. Darüber hinaus beinhaltet die Steuer- und Regeleinheit 12 mindestens einen Mikroprozessor mit dazu gehörigem nichtflüchtigen Speichern. Innerhalb der Speicher können beispielsweise Anlaufkurven der Antriebsvorrichtung 1 bzw. Abbremsphasen der Antriebsvorrichtung 1 entsprechend programmiert werden. Ferner beinhaltet die Steuer- und Regeleinheit 12 eine Strombegrenzung, die fest eingestellt sein kann bzw. auch programmierbar ist. Auch die Programmierung des abgegebenen Drehmomentes, das über den gesamten Drehzahlbereich der Antriebsvorrichtung 1 konstant ist, kann durch Programmierung beeinflusst werden. Dieses bedeutet, dass bei einer kleiner Drehzahl ein geringer Verbrauch der elektrischen Energie auch zu verzeichnen ist. Dadurch, dass der Verbrauch linear zur Drehzahl ist, hat die Steuer- und Regeleinheit 12 die Möglichkeit aufgrund entsprechender Programmierungen einen freien Zugriff auf das gesamte Spektrum des Drehmomentes. Es versteht sich, dass eine Drehzahlstabilisierung der Steuer- und Regeleinheit 12, je nach gewünschter Programmierung, möglich ist, das bedeutet konstante Drehzahl oder aber auch konstante Kräfte.

Durch die Programmierung der Steuer- und Regeleinheit 12 ist es möglich, eine derartige Antriebsvorrichtung 1 in verschiedene Leistungsklassen einzuteilen, ohne dass die entsprechenden Hartwaremodule geändert werden müssen. Es zeigt sich ferner, dass durch die besondere Funktion des Aufbaus der Antriebsvorrichtung 1 diese in Verbindung mit der Steuer- und Regeleinheit 12 eine geringe Verlustleistung aufweist. Dieses bedeutet gleichzeitig, dass eine derartige Antriebsvorrichtung 1 einen hohen Wirkungsgrad aufweist.

Oberhalb der Steuer- und Regeleinheit 12 befindet sich die Wicklung 2. Diese Wicklung 2 kann kraft- und formschlüssig mit der Steuer- und Regeleinheit 12 direkt verbunden werden, so dass Steuer- und Regeleinheit 12 und die Wicklung 2 ein separates Modul darstellen und somit eine einfache Auswechslung möglich ist. Die Wicklung 2 wird in einer ersten bevorzugten Ausführungsform als Luftwicklung ausgeführt. Zur Stabilisierung der einzelnen Wickeldrähte werden diese mit einer entsprechenden Vergussmasse zu einem kompakten Modul zusammengebacken.

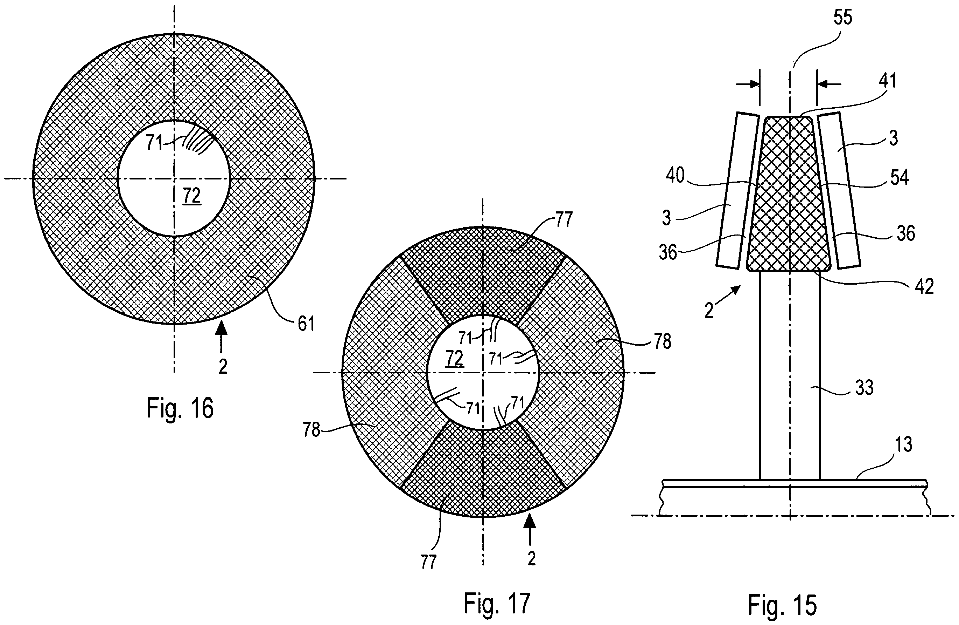

In einer weiteren bevorzugten Ausführungsform ist es möglich, dass die Wicklung 2 gemäß Figur 16 mit einem Gewebe bzw. mit einer Gewebebahn 61 in Form, vorzugsweise eines Glasfaserverbundstoffes zumindest an seinen äußeren Flächen versehen wird. Dabei wird diese Gewebebahn 61 mit in die Vergussmasse integriert. Die von der Wicklung 2 abgehenden Wicklungsanschlüsse 71 können sowohl zu einer Mitte 72 oder an den äußeren Rand der Wicklung 2 geführt werden. Dieses ist je nach Anwendungsfall sinnvoll, um die Anschlüsse 71 direkt mit der Steuer- und Regeleinheit 12 zu verbinden. Die Wicklung 2, wird wie es die Figur 16 zeigt, als flache Scheibe ausgeführt, die eine Ringform aufweist. Durch die Verklebung mit einer geeigneten Vergussmasse ist die Wicklung 2 selbsttragend und kann somit zwischen den Magneten 3 und dem noch verbleibenden Luftspalt 36 dazwischen eingesetzt werden. Bei allen Ausführungsbeispielen der hier gezeigten verschiedenen Antriebsvorrichtungen sei angemerkt, dass die Wicklung 2 stets steht und keine Rotationsbewegung ausführt.

Ferner ist es möglich, dass die Antriebsvorrichtungen 1, 34, 37, 64, 66, 79 aus einem einphasigen Netz gespeist wird und die Steuer-/Regeleinheit 12 erzeugt selbst die gewünschte Mehrphasigkeit, um so einen größeren Wirkungsgrad der Antriebsvorrichtungen zu erreichen.

Ebenfalls ist es möglich, dass die Steuer-/Regeleinheit 12 direkt mit Gleichstrom gespeist wird.

So können unterschiedliche Module der Steuer-/Regeleinheit 12 verwendet werden, es ist aber auch möglich, dass nur eine Steuer-/Regeleinheit für jegliche Art von Antriebsvorrichtungen Verwendung findet. Eine derartige Steuer-/Regeleinheit 12 kann entweder umprogrammiert werden oder aber ist in der Lage, sämtliche Versorgungs-Spannungsarten zu verarbeiten.

In einer weiteren bevorzugten Ausführungsform nach Figur 17 kann das Modul der Wicklung 2 in einzelnen Segmenten 77, 78 unterteilt sein, wobei die Anzahl der Segmente 77, 78 je nach Anwendung unterschiedlich ausgeführt werden kann. Es versteht sich, dass die Steuer-/Regeleinheit 12 dafür ausgelegt ist, um eine segmentartige Ansteuerung zu realisieren. So werden beispielsweise beim Anfahren der Antriebsvorrichtung 1, 34, 37, 64, 66, 79 alle Segmente 77, 78 der Wicklung 2 gleichzeitig angesteuert, um so ein schnelles Anfahren zu realisieren. Beispielsweise kann beim Erreichen einer bestimmten konstanten Drehzahl bei verschiedenen Segmenten 77, 78 zum Beispiel auch die Ansteuerung aufgehoben werden. Bei einer derartigen Vorgehensweise ist eine individuelle Anpassung an besondere Verwendungsmöglichkeiten gegeben.

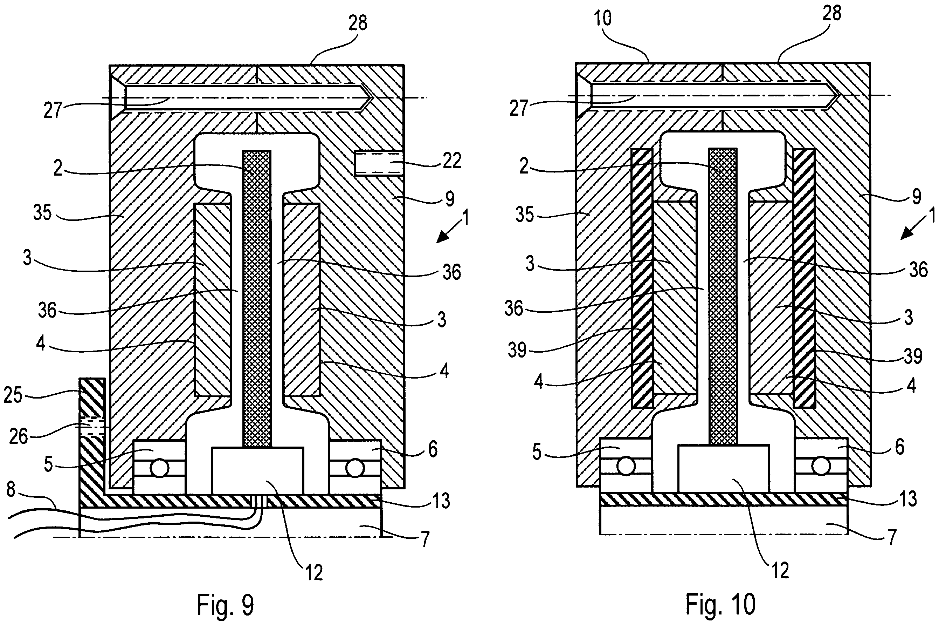

Die Figur 9 zeigt ein weiteres bevorzugtes Ausführungsbeispiel, bei dem die Achse 13 einen Befestigungsflansch in Form eines Befestigungsmoduls 25 aufweist, in dem entsprechende Befestigungsbohrungen 26 vorhanden sind. So ist es beispielsweise möglich, die Antriebsvorrichtung 1 an einer flachen Unterlage anzuschrauben.

Die Figur 10 zeigt eine Maßnahme, um die Magnetkräfte der Dauermagnetsysteme 3 zu erhöhen. Hierfür sind hinter den Dauermagneten 3 Rückschlussmodule 39 in Form eines ferromagnetischen Werkstoffes innerhalb der Magnetmodule 9 und 35 eingelassen worden. Je nach Anwendungsfall können diese Rückschlussmodule 39 verwendet werden.

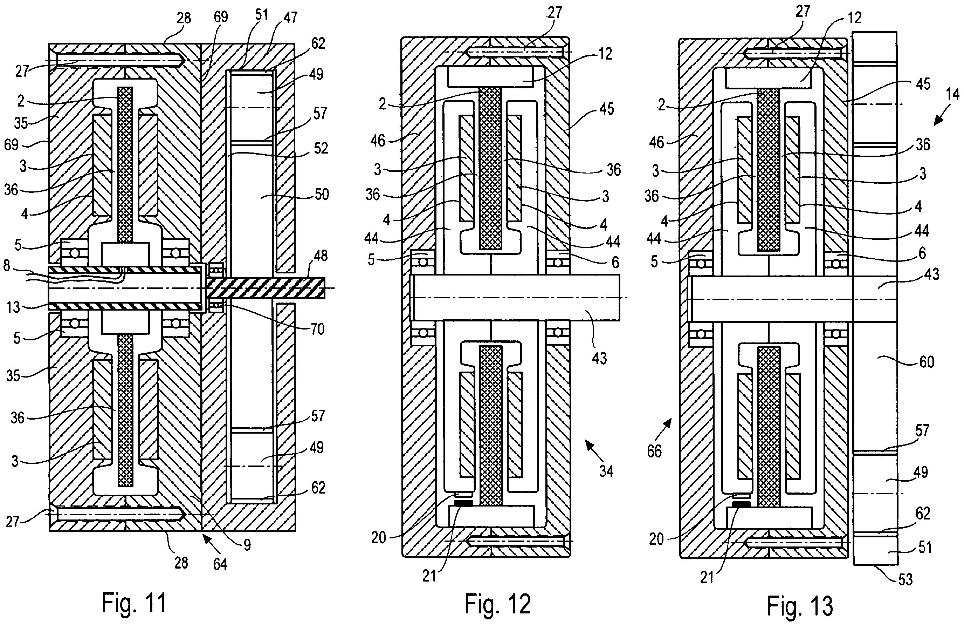

Bei einem weiteren bevorzugten Ausführungsbeispiel gemäß der Figur 11 wird eine Antriebsvorrichtung 64 vorgestellt, die auf der linken Seite der Figur 11 die bereits vor beschriebene Antriebsvorrichtung 1 mit seinen Grundmodulen beinhaltet. Durch das Anflanschen eines Getriebemoduls 47 auf der rechten Seite an der Seitenfläche 69, wird die Rotationsbewegung der Magnethalter 9 und 35 in eine Drehbewegung einer Achse 48 umwandelt, die nicht mit der Achse 13 in Wirkverbindung steht. Dabei ist das Getriebemodul 47 vorzugsweise als Planetengetriebe ausgebildet. Ein Hohlrad 51 treibt über seine Verzahnung 62 Planeten 49 an, die ihre Drehbewegung über eine Verzahnung 57 auf ein Sonnenrad 50 übertragen, dass auf der Achse 48 sitzt. Die Achse 48 ist über Lager 70 gelagert.

Während bei den vorhergehenden bevorzugten Ausführungsbeispielen stets die Umfangsfläche 28 der Antriebsvorrichtungen 1 und 64 die treibende Kraft war, so wird in dem nachfolgendem Ausführungsbeispiel der Figur 12 eine Antriebsvorrichtung 34 wiedergegeben, bei der eine Achse 43 die Rotationsbewegung ausführt. Die Achse 43 ist über Lager 5, 6 innerhalb von Gehäusehälften 45 und 46 gelagert. Auf der Achse 43 sind kraft- und formschlüssig Magnethalter 44 befestigt, die von ihrem Grundaufbau denen der vor beschriebenen Magnethalter 9, 35 entsprechen, nämlich, dass in ihnen dauerhaft Permanentmagnetsysteme 3 in den Taschen 4 befestigt sind. Es versteht sich, dass auch bei dieser Ausführungsform hinter den Magneten das Rückschlussmodul 39 vorhanden sein kann.

Die Wicklung 2 ist in diesem Falle nicht an der Achse 43 sondern an den Gehäusehälften 45, 46 befestigt. Auch hier ist eine Steuer- und Regeleinheit 12 vorhanden. Die Wicklung 2 ist in dem Ausführungsbeispiel der Figur 12 direkt oder indirekt an der Steuer- und Regeleinheit 12 befestigt. Bei einer Bestromung der Wicklung 2 durch die Steuer- und Regeleinheit 12 wird die Achse 45 aufgrund der Magnete 3 in Rotation versetzt. Es versteht sich, dass auch bei einer solchen Ausführungsform der Antriebsvorrichtung 34 die Verwendung des Inkrementalgebers 20 und/oder der Positionsmesseinrichtung 21 zur Anwendung kommen kann.

In einem weiteren bevorzugten Ausführungsbeispiel der Figur 13 wird die vor beschriebene Antriebsvorrichtung 34 durch die Komplettierung mit einem Planetengetriebemodul 14 zu einer weiteren Antriebsvorrichtung 66 ausgebaut. Dabei ist das Planetengetriebemodul 14 auf der Achse 43 mit seinem Sonnenrad 50 befestigt. In Übertragung der Verzahnung 57 auf die Planeten 49 mit ihrer Verzahnung 62 greifen diese in das Hohlrad 51 ein. In diesem Falle wird die zentrische Drehbewegung der Achse 43 auf eine äußere Umfangsfläche 53 des Hohlrades 51 übertragen, so dass die Umfangsfläche 53 zur Antriebsverwendung eingesetzt werden kann.

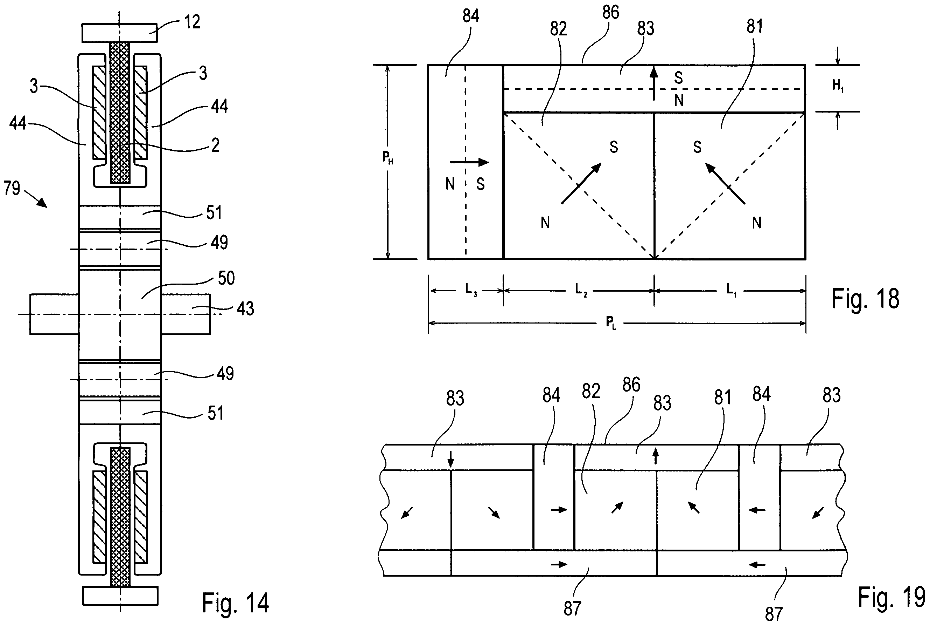

Bei einer weiteren bevorzugten Ausführungsform einer Antriebsvorrichtung 79 nach Figur 14 kann in dieser Antriebsvorrichtung 79 im Zentrum ein Getriebe, vorzugsweise ein Planetengetriebe, integriert werden. Dabei sind die Magnethalter 44 mit einer größeren Durchgangsbohrung so versehen, dass das Hohlrad 51 auf seinem äußeren Durchmesser die Magnethalter kraft- und formschlüssig aufnimmt. Die Verzahnung des Hohlrades 51 kämmt mit Planeten 49, die auf das Sonnenrad 50 mit der Achse 43 die Kraft übertragen und somit die Achse 43 als Antriebsachse ausweisen.

Anhand der Fülle der vor beschriebenen verschiedenen nicht abschließend aufgeführten, Ausführungsbeispiele zeigt sich, dass durch die Verwendung teilweise gleicher Module mit weiteren unterschiedlich gestalteten Modulen eine Konzeption für eine elektrische Antriebsvorrichtung gegeben ist, deren Verwendbarkeit nicht begrenzt ist.

Auch ist zu bedenken, dass durch den hohen Wirkungsgrad der exemplarisch dargestellten Antriebsvorrichtungen 1, 34, 37, 64, 66, bei kleinster Bauform ein Maximum an Vorteilen herausgeholt wird.

Zur Erhöhung der abgegebenen Leistung können die Antriebsvorrichtungen 1, 34, 37, 64, 66 auch mehrere Wicklungen 2 und mehrere Magnethalter 1, 34, 37, 64, 66 aufweisen, die dann nebeneinander beispielsweise auf einer Achse 13 in einem gemeinsamen Gehäuse mit einer einzigen Steuer- und Regeleinheit 12 betrieben werden. Es versteht sich, dass eine derartige Antriebsvorrichtung 1, 34, 37, 64 66 an einem einphasigen oder mehrphasigen Netz betrieben werden kann.

Bei allen dargestellten Ausführungsbeispielen der Antriebsvorrichtungen 1, 34, 37, 64, 66, 79 ist auf eine Verpackung in Form eines äußeren Gehäuses im Sinne der Übersichtlichkeit verzichtet worden.

Die stationäre Wicklung 2 ist vorzugsweise als meanderförmige Bifilarwicklung mit mehreren Sektionen ausgeführt, so dass eine Skalar-Feldaufspaltung durch entsprechende Parallelität der einzelnen Wickeldrähte erreicht wird. Durch eine Aufteilung der Gesamtwicklung in mehrere Abschnitte oder Sektionen ist ein Mehrphasenbetrieb der Antriebsvorrichtungen möglich. Ferner lassen sich durch eine geeignete Steuer- und Regelelektronik 12 die einzelnen Sektionen oder Abschnitte gezielt ansteuern. Um eine effektive Ausbeute der Wicklung 2 zu erreichen ist diese aus einer mehradrigen verdrillten Litze angefertigt. Dieses erhöht zwar den Gesamtwiderstand der Wicklung 2 senkt aber auch gleichzeitig die unerwünschten Wirbelströme. Die Wicklung 2 des Stators wird durch die Steuer- und Regelelektronik 12 mit einer erhöhten Frequenz angesteuert, was bei der Auslegung der Steuer- und Regelelektronik 12 dazu führt, dass preiswertere Transistoren verwendet werden können. Die Wicklung 2 besteht vorzugsweise aus Kupferdrähten, die aber durch Aluminiumdrähte ersetzt werden können, wenn das Gewicht des Stators eine Rolle spielen sollte.

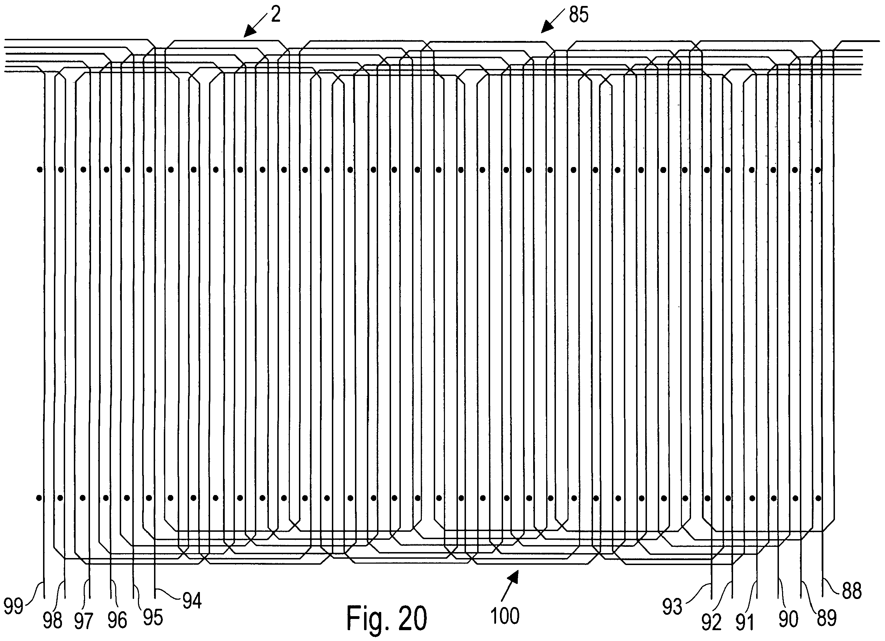

Aus der Figur 20 kann ein bevorzugtes Wickelschema, beispielsweise für eine sechsphasige Ausführung einer Wicklung 2 entnommen werden. Durch diese Darstellung des Wickelschemas wird deutlich, dass die einzelnen Wicklungen meanderförmig und bifilar, vorzugsweise unter Verwendung von verdrillten Litzen, hergestellt worden sind. Bei der Betrachtung beispielsweise eines Wicklungsanfanges 88 wird deutlich, dass in den oberen und unteren Wickelköpfen 100, 85 es zu einer Aufhebung der magnetischen Felder aufgrund der Anordnung der einzelnen Litzen kommt. Dieses trifft auch für die anderen dargestellten Wicklungsanfänge 89, 90, 91, 92 und 93 zu, die insgesamt an den Wicklungsenden 94, 95, 96, 97, 98, 99 enden. Ferner kann dieser Darstellung der Figur 20 entnommen werden, dass bei den bifilar ausgeführten Einzelwicklungen der Wicklung 2 die Einspeisung über den Wicklungsanfang 88 bis 93 und der Endpunkt des Wicklungsendes 94 bis 99 an einem Punkt, d.h. auf einer Seite liegen. Ebenfalls ergibt sich die Bifilarität dadurch, dass die einzelnen Litzen quasi hin- und zurückgeführt werden und nicht wie es üblich ist, einmal umlaufen. Durch einen solchen Aufbau entsteht ein Magnetfeld mit abwechselnder Polarität. Dabei addieren sich im Arbeitsspalt der elektrischen Maschine die Felder und in den Wickelköpfen 85, 100 heben sich diese auf. Die Effizienz wird dadurch gesteigert. Die einzelnen Drähte oder Litzen der Wicklungen 2 werden vorzugsweise durch einen faserverstärkten Kunststoff zusammengehalten. Eine solche Wicklung 2 kann neben der bereits beschriebenen konischen Form oder dergleichen auch eine Form aufweisen, die keine Verdickung oder Verbreiterung des Wickelkopfes und des Wickelfußes aufweist, was eine gleichmäßige Dicke der Wicklung 2 ohne Eisen bedeutet.

Bei dem schematisch in der Figur 15 dargestellten möglichen Ausführungsbeispiel der elektrischen Vorrichtung 1 ist auf einer Achse 13 in Verbindung mit einem Spulenhalter 33 an dessen äußerem Ende die Wicklung 2 angebracht. Die Spule 2 hat eine kreisrunde Form und ist als Ring mit dem Spulenhalter 33 verbunden.

Der in der Figur 15 dargestellte Querschnitt der Wicklung 2 zeigt sich als einen von einem Wicklungsfuß 42 im Bereich des äußeren Spulenhalters 33 nach außen hin zu einem Wicklungskopf 41 sich verjüngenden Querschnitt. Ein solcher Querschnitt kann in einer weiteren bevorzugten Ausführungsform trapezförmig sein oder einen konischen Verlauf aufweisen, wobei jedoch auch ein hyperbolischer Verlauf oder dergleichen mit nach außen hin zum größeren Durchmesser verjüngendem Querschnitt möglich ist.

Zu den Spulenoberflächen 54 und 40 sind in einem etwa parallelen Abstand über die Luftspalte 36 Magnetanordnungen 3 seitlich platziert. Durch die Magnetanordnungen 3 und 4 ist es möglich, dass durch die sich bildenden Luftspalte 36 Kühlluft nach außen hin und innerhalb der elektrischen Maschine zirkulieren kann.

Durch die sich nach außen hin verjüngende Form des Querschnittes der Spule 2 bildet sich ein Arbeitsspalt 55 aus, der ebenfalls konisch ist. Dadurch, dass der Arbeitsspalt 55 an der Außenseite der Magnete geringer ist, bildet sich dort eine höhere Feldstärke aus, die zu einem Ansteigen des Drehmomentes einer solchen elektrischen Maschine als überproportional ansteigend bezeichnet werden kann.

Das Permanentmagnetsystem 3 besteht aus Dauermagneten 81, 82, 83, 84, die zu genannten Pollängen $P_L$ zusammengefasst werden, auf die in der Figur 18 eingegangen wird. Es zeigt sich, dass die Dauermagnete 81, 82, 83, 84 innerhalb einer Polllänge $P_L$ eine bestimmte genaue Anordnung aufweisen, wobei die dort verwendeten Pfeile innerhalb der Magnete 81, 82, 83, 84 der Figur 18 den magnetischen Fluss und auch damit eine bestimmte Polarität (Nordpol oder Südpol) wiedergeben sollen. Durch eine gezielte Magnetfeldanpassung wird eine gerichtete Feldkorrektur mittels bestimmter magnetischer Magnetisierungsrichtungen vorgenommen. Die einzelnen Permanentmagnete 81, 82, 83, 84, 87 sind mit unterschiedlichen Vorzugsmagnetisierungsrichtungen ausgestattet. Quasi in der halben Höhe eines Permanentmagneten 81, 82, 83, 84 oder 87 befindet sich eine imaginäre Feldachse (gestrichelte Linie). Ausgehend von dieser Feldachse wird eine in seine Richtung wechselnde unterschiedliche Magnetisierung vorgenommen, die sich ca. um 90° zu der Feldachse erstreckt. Die Magnetisierung ändert sich aufgrund der gewählten Permanentmagnetanordnung 81, 82, 83, 84, 87 bei jedem der Einzelmagnete beispielsweise um einen festen Winkelgrad. Bei einer derartigen Feldkorrektur wird das magnetische Material neben einer bestimmten magnetischen Richtungsorientierung auch noch darüber hinaus so geometrisch zusammengesetzt, dass es beispielsweise zu dem Luftspalt 36 hin zu einer magnetischen Flussverstärkung kommt und beispielsweise zu dem Abschirmblech oder Rückschlussmodul 39 gerichtet es zu einer Flussabschwächung kommt.

Aus der Figur 18 kann die Anordnung der Dauermagnete 81, 82, 83, 84 einer ersten bevorzugten Ausführungsform entnommen werden. Eine derartige Anordnung von nebeneinander angeordneten Dauermagneten 81, 82 und 84 wird als Pollänge $P_L$ bezeichnet. Dabei weisen die Dauermagnete 81 und 82 jeweils eine Länge $L_1$ und $L_2$ auf. $L_1$ ist von seinen Abmaßen im Wesentlichen gleich $L_2$. Der Dauermagnet 84, der neben dem Dauermagnet 82 in dem Ausführungsbeispiel der Figur 18 platziert ist, weist eine Länge $L_3$. Die Länge $L_3$ bemisst im Wesentlichen die halbe Länge von $L_1$ oder $L_2$. Somit ergibt sich für die Pollänge $P_L$ folgende Angabe:

$$P_L = L_3 + L_2 + L_1$$

wobei $L_1 = L_2$
und $L_3 = \frac{1}{2} L_2$
ist.

Mit $P_H$ wird die Polhöhe festgelegt. Die Polhöhe $P_H$ ist in dem bevorzugten Ausführungsbeispiel etwa $\frac{1}{2} P_L$.

$$P_H = \frac{1}{2} P_L$$

Wie der Figur 18 ferner zu entnehmen ist, ist ein weiterer Dauermagnet 83 vorhanden, der sich über die Längen $L_1 + L_2$ der Dauermagnete 81 und 82 erstreckt. Dieser Dauermagnet 83 weist eine Höhe $H_1$ auf,

die etwa ¼ der Polhöhe $P_H$ bemisst.

$$H_1 = \tfrac{1}{4}\,P_H$$

Die Höhe der Dauermagneten 81 und 82 plus der Höhe $H_1$ ergibt die $P_H$. Der Magnet 84 erstreckt sich über die gesamte Polhöhe $P_H$.

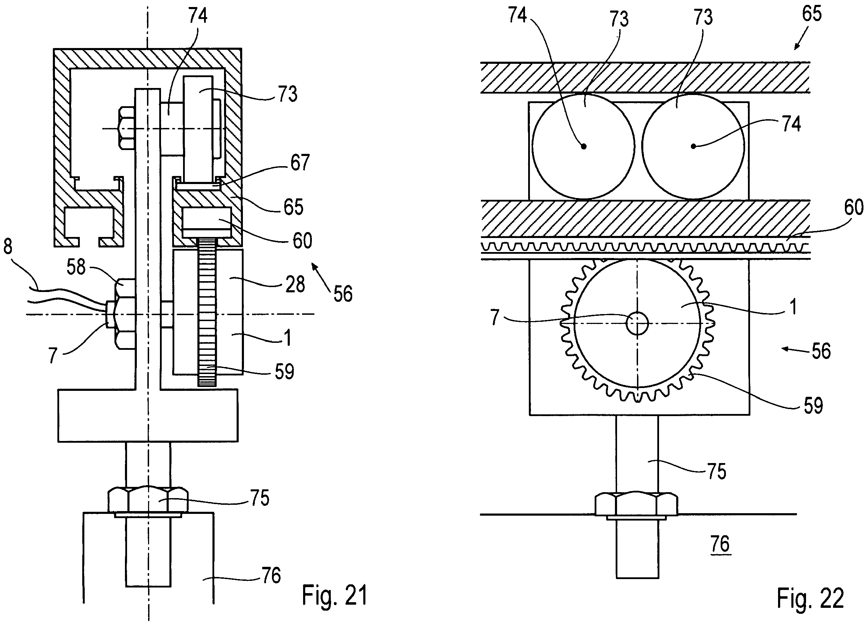

Somit zeigt sich, dass eine Pollänge $P_L$ mit einem gerichteten magnetischen Fluss an der Polfläche 86 aus den Dauermagneten 81, 82, 83 und 84 in einem ersten bevorzugten Ausführungsbeispiel der Figur 18 bestehen kann. Um den gerichteten magnetischen Fluss zu erreichen, weisen die Dauermagnete 81, 82, 83, 84 eine bestimmte Magnetisierungsrichtung auf. Diese ist durch die Angabe von Pfeilen innerhalb der Figur 22 der einzelnen Dauermagnete 81, 82, 83, 84 dargestellt worden. So ist beispielsweise die Pfeilspitze mit dem Südpol und das Pfeilende mit dem Nordpol bezeichnet worden. Durch eine derartige Vektorverschiebung der Magnetisierung in den einzelnen Litzen wird der gezielte magnetische Fluss und damit eine Korrektur gegenüber einer normalen Magnetisierung des an der Polfläche 86 austretenden magnetischen Flusses erreicht. Es kommt quasi zu einer Addition oder gezielten Verstärkung oder Ausrichtung der einzelnen Magnetflüsse. Beispielsweise ist der Dauermagnet 84 in Richtung der Pollänge $P_L$ magnetisiert worden ist. Dieser Magnetfluss addiert sich zu den etwa unter 45° verlaufenden Magnetisierungsrichtungen der Dauermagnete 81 und 82. Durch die Verwendung des Dauermagneten 83 wird neben der magnetischen Feldausrichtung der Magnete 81, 82, 83, 84 auch gleichzeitig eine Montagehilfe bei der Montage der Pollänge $P_L$ erreicht.

Die Dauermagneten 81, 82, 83, 84 können aus unterschiedlichsten permanentmagnetischen Materialien bestehen. Als bevorzugtes Material kommen die Art der Seltenen-Erden mit Kobaltlegierungen, Keramikferritlegierungen und Seltene-Erden-Eisenlegierungen neben Neodym-Eisen-Bor-Legierungen zur Anwendung. So zeigt es sich, dass die einzelnen Dauermagnete 81, 82, 83, 84 nicht alle aus dem gleichen magnetischen Werkstoff bestehen, um so noch neben einer Kostenreduktion auch einen besseren gezielten magnetischen Fluss an der Polfläche 86 zu bewirken.

In einem zweiten bevorzugten Ausführungsbeispiel der Figur 19 wird eine weitere bevorzugte Ausführungsform einer Anordnung von Dauermagneten 81, 82, 83, 84, 87 dargestellt, bei der die einzelnen Pollängen $P_L$ gemäß der Figur 18 überlappend durch einen weiteren Magneten 87 erzielt werden, der sich beispielsweise über die Magneten 81 und 82 jedoch übergreifend auf die nächste Pollänge $P_L$ erstreckt. Durch eine derartige Anordnung des Dauermagneten 87 wird eine weitere Ausrichtung des magnetischen Flusses hin zu der Polfläche 86 bewirkt. Der Dauermagnet 84 wirkt dabei als Sperrpol, weil seine Magnetisierungsrichtung quer verläuft. Die Höhe des Sperrpoles 84 ist um die Höhe des Dauermagneten 87 verringert.

Die Pollänge $P_L$ in diesem Ausführungsbeispiel setzt sich aus der Länge der Magneten 81, 82, 83 und jeweils aus der halben Länge des Magneten 87, der sich von einer Polmitte 89 aus erstreckt und einer an den Enden der Pollänge $P_L$ halben Länge des Magneten 84 zusammen.

Die Ausführung der Figur 21 zeigt eine bevorzugte Ausführungsform einer Antriebeinheit 1. Dabei ist die Antriebseinheit 1 über eine Hohlwelle 7 an einer Aufhängung 56 mittels einer Verschraubung 58 befestigt. Die Hohlwelle 7 ist gleichzeitig für die Abführung der elektrischen Anschlüsse 8 verwendet worden.

Die Aufhängung 56 wird zum Einen dafür verwendet, ein ortsveränderliches Wandelement 76 über eine Verschraubung 75 aufzunehmen und andererseits ist an dem oberen Ende der Aufhängung 56 der Bereich von Lauf- und Tragrollen 73, die über eine Achse 74 drehbar an der Aufhängung 56 angebracht sind. Die Laufrolle 73 läuft dabei auf einer Einlage 67, die innerhalb der Laufschiene 65 eingebettet ist. Die Laufschiene 65 ist vorzugsweise aus einem Leichtmetall gefertigt und würde aufgrund der relativ hohen Gewichte der Wandelemente sonst im Bereich der Lauf- und Tragrollen eine Abplattung erfahren.

Die Antriebseinheit 1 weist eine auf einer Umfangsfläche 28 angeordnete Verzahnung 59 auf, die mit einer ortsfesten Verzahnung 60 der Laufschiene 65 zusammenwirkt.

Das Zusammenwirken der Verzahnung 59 der Antriebseinheit 1 mit der ortsfesten Verzahnung 60 innerhalb der Laufschiene 65 kann aus der Figur 22 in der Seitenansicht entnommen werden. Das Gewicht der Wandelementes 76 wird über die Lauf- und Tragrollen 73 innerhalb der Laufschiene 65 aufgenommen, wobei die Antriebseinheit 1 nicht das Gewicht der Wandelemente 76 tragen muss und nur mit seiner Verzahnung 59 das entsprechende Drehmoment aufbringt und somit eine Fortbewegung des Wandelementes 76 bewirkt.

In der Figur 21 wird in einer schematischen Darstellung ein mögliches erstes bevorzugtes Ausführungsbeispiel einer Antriebseinheit 1 wiedergegeben, bei der nur die Elemente dargestellt worden sind, die für die vorliegende Erfindung relevant sind.

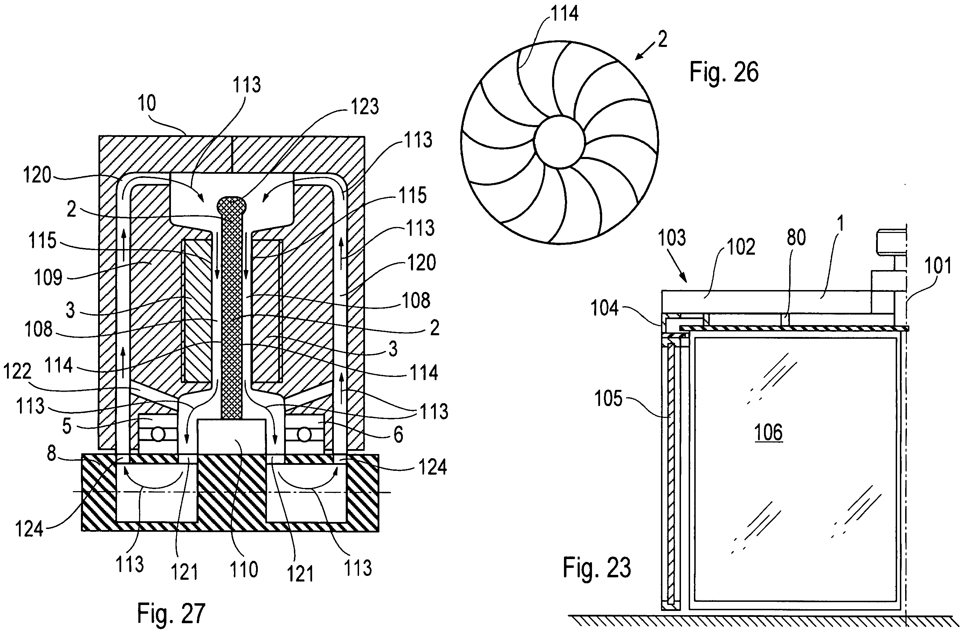

In der Figur 23 ist in einer Teilschnittdarstellung eine Karuselltür mit um eine Achse 101 drehbar gelagerten Drehflügeln 106 dargestellt. Bei dieser Darstellung der Figur 23 ist auf die mögliche Konstruktionsausführung nicht näher eingegangen worden. Eingefasst werden die Drehflügel 106 durch Trommelwände 105 der Karuselltür 103. Dabei werden die Trommelwände 105 an der Dachkonstruktion 102 mit dem nach außen hin sichtbaren Stirnband 104 vorzugsweise gehalten. Ebenfalls an der Dachkonstruktion 102 ist eine Antriebsvorrichtung 1 vorhanden, die mit einem Drehmomentenübertragungsmittel 80, was an den Drehflügeln befestigt ist, zusammenwirkt. Durch das Drehmomentenübertragungsmittel 80, das je nach Ausführung der Antriebsvorrichtung 1 eine Verzahnung, einen Reibbelag oder dergleichen aufweisen kann, wird eine Rotation der Drehflügel 106 bewirkt.

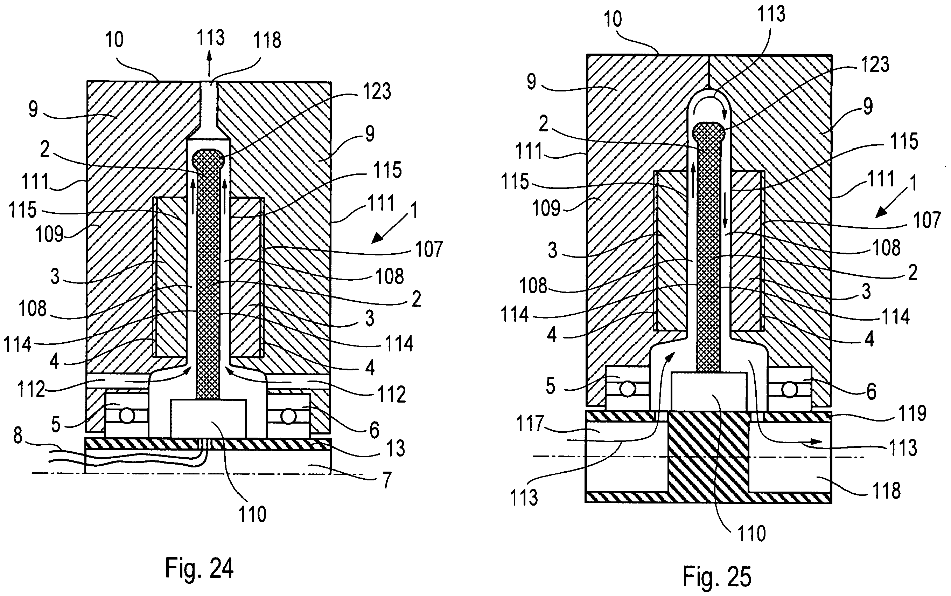

In der Figur 24 wird in einer ersten bevorzugten Ausführungsform in einer Schnittdarstellung ein Teil einer elektrischen Vorrichtung 1, die mit ihrer runden Umfangsfläche 10 abgebildet ist, dargestellt. Bei dieser Ausführung werden auf einer Hohlwelle 7 mittels Lager 5 vorzugsweise die zwei Gehäusehälften 9, die kraft- und formschlüssig miteinander verbunden sind und an ihrem Umfang die Umfangsfläche 10 bilden, eine flache, rotierende elektrische Maschine dargestellt. Innerhalb der Gehäusehälften 9 sind Magnethalter 109 vorhanden, in denen Magnetsysteme 3 eingebettet sind. Diese Magnetsysteme 3 können sowohl mit als auch ohne eine rückseitige ferromagnetische Platte auskommen, wobei jedoch in dem Ausführungsbeispiel eine magnetische Abschirmung 107 vorhanden ist, die gegenüber einem ferromagnetischen Rückschluss wesentlich dünner ist.

Bei dem Ausführungsbeispiel der Figur 24 ist quasi in der Mitte eine Wicklungsanordnung 2 wiedergeben worden, die an ihrem zur Hohlwelle 7 gerichteten Bereich eine integrierte Steuer- und Regeleinheit 110 beinhaltet und als flache, kreisrunde, stehende und eisenlose Wicklungsanordnung 2 ausgebildet worden ist. Zwischen der Wicklungsanordnung 2 und den seitlichen Permanentmagnetsystemen 3 ist jeweils ein Luftspalt 108 vorhanden.

Da es sich bei dieser bevorzugten Ausführungsform um eine direkte Ausführung eines Kühlsystems handelt, sind innerhalb der Hohlwelle 7 auf ihrem Umfang Ansaugbohrungen 116 vorhanden, über die die Kühlströme der angesaugten Luft in Strömungsrichtungen 113 zu der Umfangsfläche 10 geleitet bzw. gesogen werden. Der Austritt der Kühlströme geschieht über Ausblasbohrungen oder Ausblaskanäle 118, die sich in mehrfacher Ausfertigung auf der Umfangsfläche 10 befinden. Durch diese Ausführung einer elektrischen Maschine 1, bei der die Gehäusehälften 9 sich in Rotation befinden, wird eine Zwangskonvektion von Kühlströmen über die Strömungsrichtungen 113 bewirkt. Aufgrund des geringen Luftspaltes 108 wird sich in diesem Bereich die Strömungsgeschwindigkeit erhöhen und somit zu einer effektiveren Kühlung der Wicklungsanordnung 2 führen.

Das bevorzugte Ausführungsbeispiel der Figur 25 unterscheidet sich von dem vor beschriebenen bevorzugten Ausführungsbeispiel dahingehend, dass als Achse zwar eine Hohlwelle 7 verwendet wird, durch welche auch die elektrischen Anschlüsse 8 an die Steuer- und Regeleinheit 110 für die Wicklungsanordnung 2 geführt werden, doch sind in der Hohlwelle 7 keine Ansaugbohrungen 116 vorhanden. Aus diesem Grunde sind in den Gehäusehälften 9, vorzugsweise im Bereich zu der Hohlwelle 7, Ansaugbohrungen 112 vorhanden, über die die entsprechenden Kühlströme wie in der vor bezeichneten Ausführung an die Umfangsfläche 10 geleitet werden.

Die Figur 26 zeigt in einer Draufsicht eine Wicklungsanordnung 2, die vorzugsweise aus einzelnen Wicklungen besteht, die beispielsweise meanderförmig gewickelt sind. Wie der Darstellung der Figur 26 zu entnehmen ist, befindet sich auf der Oberfläche der Wicklungsanordnung 2 eine in mehrfacher Anzahl ausgebildete Strömungsleitung 114. Diese Strömungsleitung 114 ist in ihrer Anordnung schaufelförmig ausgebildet und als mikrostrukturierte Oberfläche hergestellt worden. Durch eine solche Ausbildung mit einer mikrostrukturierten Oberfläche in Form von Strömungsleitungen 114 wird die Strömungsgeschwindigkeit 113 der Kühlströme innerhalb des Luftspaltes 118 erhöht.

In einer weiteren bevorzugten Ausführungsform ist es möglich, dass ebenfalls die Oberfläche der Permanentmagnetsysteme 3, wie die Wicklungsanordnung 2, durch beispielsweise thermoplastische Isolation Strömungsleitungen 115 aufweist, die ebenfalls eine mikrostrukturierte Oberfläche aufweisen. Um den Kühlstrom innerhalb der Luftspalte 108 weiterhin zu erhöhen, ist es in einer weiteren bevorzugten Ausführungsform denkbar, dass die Strömungsleitungen 114 und 115 gegenläufig ausgebildet sind. Durch eine derartige gegenläufige Ausbildung wird der Kühlstrom an der Oberfläche der Wicklungsanordnung 2 wesentlich verbessert.

Ein indirektes Kühlsystem kann der Figur 27 in einer weiteren bevorzugten Ausführungsform entnommen werden. In einem solchen Ausführungsbeispiel werden, wie bei den vorhergehenden bevorzugten Ausführungsbeispielen vorzugsweise ebenfalls die Wicklungsanordnung 2 und die Permanentmagnetsysteme 3 mit den an ihrer Oberfläche vorhandenen Strömungsleitungen 114 und 115 in der beschriebenen Ausführungsform eingesetzt. Dabei handelt es sich um einen geschlossenen Kreislauf, so dass die Kühlströme in Strömungsrichtung 113 hinter den Magnethaltern 109 über entsprechende Strömungskanäle 120 zu dem Außenumfang 10 der elektrischen Maschine 1 geführt werden und dort durch eine Umleitung in dem Gehäuse 9 in den Bereich des Luftspaltes 108 gedrückt werden. Innerhalb des Luftspaltes 108 erhöhen die Kühlströme ihre Strömgeschwindigkeit und treten an einer Bohrung 121 beispielsweise in den Achsenbereich ein und verlassen den Achsenbereich über eine Bohrung 124 und treten somit wieder in den Strömungskanal 12026 ein. Wie unschwer festzustellen ist, beinhaltet ein solches indirektes Kühlsystem einen Kreislauf von Kühlströmen innerhalb der elektrischen Maschine 1 in Verbindung mit der Masse des umgebenden Gehäuses.

**Bezugszeichen**

1.     Antriebsvorrichtung

| 2. | Wicklung |
| 3. | Permanentmagnetsystem |
| 4. | Tasche |
| 5. | Lager |
| 6. | Lager |
| 7. | Hohlwelle |
| 8. | elektrische Anschlüsse |
| 9. | Magnethalter |
| 10. | Außenfläche |
| 11. | Lauffläche |
| 12. | Steuer-/Regeleinheit |
| 13. | Achse |
| 14. | Planetengetriebemodul |
| 15. | Verzahnung |
| 16. | Antriebsmittelsicherung |
| 17. | Laufbelag |
| 18. | Vertiefung |
| 19. | Lauffläche |
| 20. | Inkrementalgeber |
| 21. | Positionsmesseinrichtung |
| 22. | Gewindebohrung |
| 23. | Befestigungsbohrung |
| 24. | Flansch |
| 25. | Befestigungsmodul |
| 26. | Befestigungsbohrung |
| 27. | Verschraubung |
| 28. | Umfangsfläche |
| 29. | Verbindungsfläche |
| 30. | Ausschnitt |
| 31. | Antriebsmodul |
| 32. | Antriebsmodul |
| 33. | Spulenhalter |
| 34. | Antriebsvorrichtung |
| 35. | Magnethalter |
| 36. | Luftspalt |
| 37. | Antriebsmodul |
| 38. | Halter |
| 39. | Rückschlussmodul |
| 40. | Wicklungsoberfläche |
| 41. | Wicklungskopf |
| 42. | Wicklungsfuß |
| 43. | Achse |
| 44. | Magnethalter |
| 45. | Gehäusehälfte |
| 46. | Gehäusehälfte |
| 47. | Getriebemodul |
| 48. | Achse |
| 49. | Planet |
| 50. | Sonnenrad |
| 51. | Hohlrad |
| 52. | Steg |
| 53. | Umfangsfläche |
| 54. | Wicklungsoberfläche |
| 55. | Arbeitsspalt |
| 56. | Aufhängung |
| 57. | Verzahnung |
| 58. | Verschraubung |
| 59. | Verzahnung |

| | | | | |
|---|---|---|---|---|
| 60. | Verzahnung | | 89. | Wicklungsanfang |
| 61. | Gewebebahn | | 90. | Wicklungsanfang |
| 62. | Verzahnung | | 91. | Wicklungsanfang |
| 63. | Verzahnung | | 92. | Wicklungsanfang |
| 64. | Antriebsvorrichtung | | 93. | Wicklungsanfang |
| 65. | Laufschiene | | 94. | Wicklungsende |
| 66. | Antriebsvorrichtung | | 95. | Wicklungsende |
| 67. | Einlage | | 96. | Wicklungsende |
| 68. | Getriebemodul | | 97. | Wicklungsende |
| 69. | Seitenfläche | | 98. | Wicklungsende |
| 70. | Lager | | 99. | Wicklungsende |
| 71. | Wicklungsanschlüsse | | 100. | Wicklungskopf |
| 72. | Mitte | | 101. | Achse |
| 73. | Lauf- und Tragrollen | | 102. | Dachkonstruktion |
| 74. | Achse | | 103. | Karusselltür |
| 75. | Verschraubung | | 104. | Stirnband |
| 76. | Wandelement | | 105. | Trommelwand |
| 77. | Wicklungssegment | | 106. | Drehflügel |
| 78. | Wicklungssegment | | 107. | Abschirmung |
| 79. | Antriebsvorrichtung | | 108. | Luftspalt |
| 80. | Verzahnung | | 109. | Magnethalter |
| 81. | Magnet | | 110. | Steuer-/Regeleinheit |
| 82. | Magnet | | 111. | Außenfläche |
| 83. | Magnet | | 112. | Ansaugbohrung |
| 84. | Magnet | | 113. | Strömungsrichtung |
| 85. | Wicklungskopf | | 114. | Strömungsleitung |
| 86. | Polfläche | | 115. | Strömungsleitung |
| 87. | Magnet | | 116. | Ansaugbohrung |
| 88. | Wicklungsanfang | | 117. | Ansaugung |

118. Ausblaskanal/Bohrung

119. Achse

120. Strömungskanal

121. Bohrung

122. Bohrung

123. Wicklungskopf

124. Bohrung

$P_H$ Polhöhe

$P_L$ Pollänge

**Patentansprüche**

1. Modulare elektrische Vorrichtung (1, 34, 37, 64, 66, 79), im Wesentlichen bestehend aus einer flachen, ringförmigen, selbsttragenden Wicklung (2) und damit beidseitig zusammenwirkenden Permanentmagnetsystemen (3), **gekennzeichnet dadurch, dass** die Permanentmagnetsysteme (3) aus Dauermagneten (81, 82, 83, 84, 87) mit einer direkt aneinander gereihten mehrfachen Pollänge $P_L$ gebildet werden, die jeweils unterschiedliche Vorzugsmagnetisierungsrichtungen aufweisen, die innerhalb einer Pollänge $P_L$ mit einer Polfläche (86) so ausgebildet sind, dass an jeder Polfläche (86) ein gerichteter verstärkter, magnetischer Fluss mit wechselnder Polarität besteht, wobei die elektrische Vorrichtung (1, 34, 37, 64, 66, 79) ein konstantes Drehmoment über seinen gesamten Drehzahlbereich aufweist, und für eine direkte oder indirekte Antriebsart über eine Achse (13, 43) oder über eine runde Umfangsfläche (28) verwendbar ist, wobei die elektrische Vorrichtung (1, 34, 37, 64, 66, 79) eine direkte oder indirekte Kühlung der Wicklung (2) aufweist, wobei die Wicklung (2) als selbsttragende Luftspule ohne Eisen meanderförmig als Bifilarwicklung mit mehreren Sektionen für einen mehrphasigen Betrieb ausgeführt ist.

2. Modulare Vorrichtung nach Anspruch 1, **dadurch gekennzeichnet, dass** die Antriebsvorrichtung (1) an seiner sich drehenden Umfangsfläche (28) eine Verzahnung (63) oder einen Laufbelag (17) oder eine eingelassene Lauffläche (11) aufweist oder mit unterschiedlichen, austauschbaren Antriebsmodulen (31, 32, 37) oder einem Getriebemodul ausgestattet ist.

3. Modulare Vorrichtung nach Anspruch 1 oder 2, **dadurch gekennzeichnet, dass** die Antriebsmodule (31, 32, 37) an dem Magnethalter (9) oder (35) befestigt werden, wobei die Magnethalter (9, 35) mittels Verschraubungen (27) spiegelbildlich so gegeneinander montiert werden, dass zwischen den Magnetensystemen (3) und der Wicklung (2) ein Luftspalt (36) auf jeder Seite der Wicklung (2) vorhanden ist.

4. Modulare Vorrichtung nach einem der vorhergehenden Ansprüche, **dadurch gekennzeichnet, dass** die Magnethalter (9, 35, 44) mit Rückschlussmodulen (39) oder ferromagnetischen Abschirmungen hinter den Magnetsystemen (3) ausgestattet sind.

5. Modulare Vorrichtung nach einem oder mehreren der vorhergehenden Ansprüche, **dadurch gekennzeichnet, dass** die Pollänge $P_L$ sich aus einer Länge $L_1$ des Magneten (81) plus einer Länge $L_2$ des Magneten (83) plus einer Länge $L_3$ des Magneten (84) zusammensetzt, wobei die Länge $L_1$ des Magneten (81) im Wesentlichen gleich der Länge $L_2$ des Magneten (83) entspricht und die Länge $L_3$ des Magneten (84) im Wesentlichen einer halben Länge $L_1$ oder $L_2$ entspricht, und dass die Polhöhe $P_H$ der Dauermagnete (81, 82, 83, 84) im Wesentlichen die Hälfte der Pollänge $P_L$ bemisst, und der Dauermagnet (83) im Wesentlichen der Gesamtlänge der Dauermagnete (81) und (82) entspricht, und dass eine Höhe $H_1$ des Dauermagneten (83) im Wesentlichen ein Viertel der Polhöhe $P_H$ bemisst, und dass die Höhe der Dauermagnete (81, 82) im Wesentlichen Dreiviertel der Polhöhe $P_H$ bemisst, und dass der Dauermagnet (84) sich über die gesamte Polhöhe $P_H$ erstreckt oder um die Höhe des Dauermagneten (87) reduziert ist.

6. Modulare Vorrichtung nach einem oder mehreren der vorhergehenden Ansprüche, **dadurch gekennzeichnet, dass** die Wicklung (2) aus einzelnen, verdrillten Litzen besteht, die bifilar und gleichzeitig meanderförmig so gewickelt ist, dass eine Skalar-Feldaufspaltung oder Skalar-Vektorverkippung des magnetischen Flusses der Wicklung (2) erzielt wird, wobei die Bifilarität nicht gegensinnig ausgeführt ist und gleichsinnig in Reihe geschaltet werden.

7. Modulare Vorrichtung nach einem oder mehreren der vorhergehenden Ansprüche, **dadurch gekennzeichnet, dass** die Wicklung (2) einen von einem Wicklungsfuß (42) aus nach außen hin zu einem Wicklungskopf (41) sich verjüngenden Querschnitt aufweist, der im Wesentlichen trapezförmig oder kegelstumpfförmig oder konisch oder mit einem hyperbolischen Verlauf ausgeprägt ist.

8. Modulare Vorrichtung nach einem oder mehreren der vorhergehenden Ansprüche, **dadurch gekennzeichnet, dass** die Wicklung (2) aus einer Vielzahl von verdrillten Litzen besteht und aus mindestens zwei Einzelwicklungen oder -segmenten besteht, die bifilar und meanderförmig so gewickelt sind, dass die Einspeise- und Endpunkte an der gleichen Seite liegen und durch eine aushärtbare Vergussmasse fixiert werden, und dass die Vergussmasse faserverstärkt oder mit einer Gewebebahn versehen ist, wobei die Wicklung (2) austauschbar und für unterschiedliche Spannungen und/oder elektrische Phasen ausgelegt ist.

9. Modulare Vorrichtung nach einem oder mehreren der vorhergehenden Ansprüche, **dadurch gekennzeichnet, dass** die Vorrichtung ein direktes oder indirektes Kühlsystem beinhaltet, dessen Kühlströme innerhalb des Luftspaltes (36, 108) durch die Drehbewegung der elektrischen Maschine (1) selbst erzeugt werden, wobei Strömungsleitungen (19) auf der Oberfläche der thermoplastischen Isolation der Wicklungsanordnung (2) als mikrostrukturierte Oberfläche ausgebildet sind, und/oder dass die Strömungsleitungen (115) auf der Oberfläche der Permanentmagnetsystem (3) als mikrostrukturierte Oberfläche aus einem thermoplastischen Kunststoff bestehen.

10. Modulare elektrische Vorrichtung ausgebildet nach den vorhergehenden Ansprüchen als Motor und/ oder Generator.

Fig. 1

Fig. 2

Fig. 3

Fig. 4

EP 2 477 316 A2

EP 2 477 316 A2

Fig. 5

Fig. 6

Fig. 7

Fig. 8

Fig. 9

Fig. 10

EP 2 477 316 A2

Fig. 13

Fig. 12

Fig. 11

Fig. 15

Fig. 16

Fig. 17

Fig. 18

Fig. 19

Fig. 14

Fig. 20

Fig. 22

Fig. 21

Fig. 25

Fig. 24

27

Fig. 26

Fig. 23

Fig. 27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3231966 A1
- DE 10335688 A1
- DE 10208566 A1